# EUROPÄISCHE PATENTSCHRIFT

(11) **EP 1 185 408 B1**
(45) Veröffentlichungstag und Bekanntmachung des Hinweises auf die Patenterteilung: **10.11.2004**
(21) Anmeldenummer: 00929486.9
(22) Anmeldetag: 04.05.2000
(51) Int. Cl.: B29C 45/16

(54) **MAGAZIN FÜR MIKROSTRUKTURIERTE FORMTEILE UND VERFAHREN ZU DESSEN HERSTELLUNG**
MAGAZINE FOR MICROSTRUCTURED MOULDED PARTS AND METHOD FOR THE PRODUCTION THEREOF
MAGASIN POUR PIECES MOULEES MICROSTRUCTUREES ET PROCEDE DE PRODUCTION DUDIT MAGASIN

(30) Priorität: 09.06.1999 DE 19926181
(43) Veröffentlichungstag der Anmeldung: 13.03.2002
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); WEBER, Lutz, D-66497 Contwig (DE)
(74) Vertreter: Fuchs Mehler Weiss & Fritzsche
(86) Internationale Anmeldenummer: PCT/EP2000/003979
(87) Internationale Veröffentlichungsnummer: WO 2000/076740

(56) Entgegenhaltungen:
- EP-A- 0 517 613
- DE-A- 19 709 136
- DE-A- 19 842 456

## Beschreibung

Die Erfindung betrifft ein Verfahren zur abformtechnischen Herstellung und Magazinierung von mindestens einem mikrostrukturierten Formteil als Magazin-Formteil-Verbund sowie ein Magazin mit mindestens einem mikrostrukturierten Formteil, das als Magazin-Formteil-Verbund vorliegt.

In der Regel werden in der Kunststofftechnik Formteile in einem Spritzgußverfahren in einer Vielzahl mittels mikrotechnisch hergestellten Formeinsätzen hergestellt und dann einzeln als Schüttgut einer nachfolgenden Montage zugeführt. Diese Vorgehensweise wird auch für die Montage von mikrostrukturierten Formteilen, welche nachfolgend auch als Mikrobauteile bezeichnet werden, verwendet, wobei die Montagetoleranzen der Mikrobauteile aufgrund der Mikrostrukturen im Vergleich zu Formteilen ohne Mikrostrukturen noch sehr viel kleiner sind.

Nachteilig bei diesem Montageverfahren ist, daß der bei der abformtechnischen Herstellung der Mikrobauteile durch den Formeinsatz vorgegebene Ordnungszustand verloren geht und die Formteile nur einzeln und nicht in einer Vielzahl montiert werden können. Außerdem ist ein erheblicher Geräteaufwand sowohl für die Wiederherstellung des Ordnungszustandes als auch für die Montage der Mikrobauteile notwendig.

Zur Vermeidung dieser Nachteile ist es daher bekannt, die Mikrobauteile vor deren Montage in einem separat und zusätzlich hergestellten Magazin zu magazinieren, so daß infolge die Mikrobauteile in einer Vielzahl montiert werden können. Die Hauptnachteile dieser Vorgehensweise für die Handhabung der Mikrobauteile sind, daß durch die beiden separaten Herstellungsprozesse von Mikrobauteilen und Magazin Fertigungstoleranzen entstehen, die zu Ungenauigkeiten in der Positions- und Lagegenauigkeit der Mikrobauteile im Magazin führen. Ferner sind bei dem zusätzlich notwendigen Magazinierungsschritt Fügespalte im Magazin für die Einlagerung der Mikrobauteile in das Magazin notwendig. Demnach wird auch durch diese Vorgehensweise der Aufwand, und insbesondere der Geräteaufwand bis zur und bei der Montage der Mikrobauteile, nicht wesentlich verringert.

Um einen zusätzlichen Magazinierungsschritt zu vermeiden, hat der Anmelder bereits zwei Verfahren angemeldet, bei denen eine direkte aufeinanderfolgende Herstellung der Mikrobauteile und des Magazins offenbart wird, so daß die bisher beschriebenen Nachteile entfallen.

Aus der WO 98/39230 ist ein Verfahren zur Herstellung und Magazinierung von Mikrobauteilen sowie ein Magazin für mindestens ein Mikrobauteil und ein Montageverfahren für Mikrobauteile bekannt. Bei diesem Verfahren wird in einem ersten Schritt mindestens ein Mikrobauteil auf einer Bauteilgrundplatte hergestellt. Anschließend werden mittels eines sich verfestigenden Formstoffs mindestens die freiliegenden seitlichen Flächen des Mikrobauteils eingegossen. Danach wird die Bauteilgrundplatte und/oder der das Mikrobauteil überdeckende Formstoff mittels mechanischer Bearbeitung, wie beispielsweise durch Schleifen, Läppen, Fräsen oder Polieren, entfernt. Das hierdurch entstehende Magazin für mindestens ein Mikrobauteil besteht aus einer scheibenförmigen Platte, die das Mikrobauteil an allen seinen seitlichen Flächen formschlüssig umfasst. Das Montageverfahren sieht vor, daß das Magazin von einer Magazinhalterung erfasst und gehalten wird, woraufhin das zu montierende Mikrobauteil aus dem Magazin herausgedrückt und gleichzeitig an seinem bestimmungsgemässen Ort positioniert wird.

Aus der WO 98/39501 ist ein Verfahren zur Herstellung und Magazinierung von metallischen Mikrobauteilen bekannt. Hierbei wird in einem ersten Verfahrensschritt ein Magazin aus elektrisch nichtleitendem Formstoff hergestellt, der mindestens ein Mikrobauteil aus einem chemisch lösbaren Material (Mikrobauteil erster Art) an seinen seitlichen Flächen formschlüssig umfaßt. Die hierbei bevorzugte Ausführungsform zur Herstellung des Magazins mit den Mikrobauteilen erster Art verwendet das zuvor beschriebene Verfahren der WO 98/39230 zur Herstellung und Magazinierung von Mikrobauteilen. In einem zweiten Verfahrensschritt wird das Magazin und das Mikrobauteil erster Art mit einer Beschichtung oder mit einem Substrat aus einem elektrisch leitfähigen Material einseitig versehen. Im nächsten Schritt wird das Mikrobauteil erster Art entfernt. Anschließend wird das leere Magazin mit einem Metall oder einer Metallegierung zur Herstellung eines Mikrobauteiles zweiter Art aufgefüllt. Schließlich wird die Schicht oder das Substrat entfernt.

Nachteilig bei beiden beschriebenen Verfahren ist, daß die Mikrobauteile zunächst auf einer Grundplatte abgeformt werden und dann zur Fixierung der Position der Mikrobauteile der Formstoff in eine Gießform eingegossen wird. Hierdurch bedarf es zur Herstellung des Magazins eines aufwendigen zusätzlichen Prozeßschrittes, wobei durch mechanische Bearbeitung sowohl die Grundplatte als auch der in der Gießform über die Mikrobauteile entstandene Überstand des Formstoffs entfernt werden muß. Da das Magazin die Mikrobauteile seitlich formschlüssig umgibt, entspricht die Magazinhöhe immer der Höhe der Mikrobauteile. Hierdurch sind für Mikrobauteile mit sehr geringer Bauhöhe nur sehr dünne Magazine herstellbar, welche dann sowohl für die Montage als auch den Transport der Mikrobauteile zum Montageort zu instabil sind. Ferner ist die Magazinierung von in der Bauform komplizierteren Mikrobauteilen mit Hinterschnitten überhaupt nicht möglich, und Mikrobauteile mit Verjüngungen sind nur in einer Richtung und zwar in der, der Verjüngung entgegengelegenen Richtung herausschiebbar. Generell ist für eine maschinelle Montage der Mikrobauteile unter Verwendung beispielsweise eines Montagegreifers die Ausführung des Magazins als formschlüssige Platte nachteilig, da der Montagegreifer die Mikrobauteile nicht an den Seitenflächen anpacken kann.

Aufgabe der Erfindung ist es, ein Magazin mit mikrostrukturierten Formteilen und ein Verfahren zur Herstellung und Magazinierung von mikrostrukturierten Formteilen anzugeben, wobei die bei der abformtechnischen Herstellung der Formteile realisierte Lage verschiedener mikrostrukturierter Formteile zueinander im erfindungsgemäßen Magazin und damit für die Handhabung beim Transport und die Montage der Formteile beibehalten wird und alle beschriebenen Nachteile entfallen.

Diese Aufgabe wird durch die Verfahren nach den Ansprüchen 1, 2 und 12, sowie das Magazin nach Anspruch 15 gelöst.

Das Verfahren zur abformtechnischen Herstellung und Magazinierung von mindestens einem mikrostrukturierten Formteil als Magazin-Formteil-Verbund ist durch folgende Prozeßschritte gekennzeichnet:
a. Abformtechnische Herstellung mindestens eines mikrostrukturierten Formteils unter Verwendung eines zunächst geschlossenen Werkzeuges, welches mindestens eine erste und eine zweite Werkzeughälfte aufweist;
b. Öffnen der beiden Werkzeughälften, wobei das Formteil in der ersten Werkzeughälfte verbleibt;
c. Wechseln zumindest der zweiten Werkzeughälfte gegen zumindest eine weitere Werkzeughälfte;
d. Abformtechnische Herstellung des Magazins unter Verwendung der das Formteil aufweisenden ersten Werkzeughälfte und der weiteren Werkzeughälfte;
e. Gemeinsames Entformen des Magazins und des Formteils als Magazin-Formteil-Verbund.

Das erfindungsgemäße Verfahren ermöglicht die direkte Herstellung von mehreren Formteilen bzw. Mikrobauteilen mit vorzugsweise Mikrostrukturen mit kleinsten Strukturabmessungen von < 1 mm, insbesondere < 300 µm und deren Magazinierung in Form eines Magazin-Formteil-Verbundes ohne Nachbearbeitung, wobei ein geteiltes Werkzeug und vorzugsweise ein Zweikomponenten-Spritzgußverfahren zum Einsatz kommt. Hierdurch ist eine wesentlich kostengünstigere und effizientere Herstellung der Mikrobauteile und des Magazins im Vergleich zum vorbekannten Stand der Technik erreicht, da Mikrobauteile und Magazin mit einer Werkzeugaufspannung in zwei nacheinander abfolgenden Abformprozessen hergestellt werden. Damit entfallen sowohl zusätzliche Bauelemente, wie die bisher beim Vakuumgießverfahren zum Einsatz gekommene Grundplatte, als auch aufwendige zusätzliche Arbeitsschritte in Form einer notwendigen mechanischen Nachbearbeitung zur Herstellung des Magazins.

Ein weiterer Vorteil des Verfahrens besteht darin, daß die durch das Werkzeug bei der abformtechnischen Herstellung von Mikrobauteilen vorgegebene und durch die erfindungsgemäße abformtechnische Herstellung des Magazins fixierte Lage verschiedener Formteile zueinander im neuerungsgemäßen Magazin erhalten bleibt. Hierdurch ist eine sehr präzise Montage der Mikrobauteile ermöglicht, da die Mikrobauteile durch den so erzeugten Ordnungszustand der Formteile mit sehr kleinen Montagetoleranzen zu handhaben sind. Ferner ermöglicht dies eine Lagerung und einen Transport der Mikrobauteile mit sehr geringem Aufwand, da die Mikrobauteile zusammenhängend verbracht werden können.

Als zusätzlicher Vorteil ergibt sich, daß Fertigungslinien zur Herstellung von Magazinen durchgeführt werden, welche beispielsweise auf den Anschluß an die Fertigungslinie der Halbleiterindustrie ausgelegt sind. Bei diesen Fertigungslinien wird das Magazin vorzugsweise im in der Halbleitertechnik üblichen Format eines Wafers mit beispielsweise 3, 4, 5 oder 6 Zoll hergestellt. Hierdurch ist eine nachfolgende Weiterverarbeitung des Magazins und/oder der Mikrobauteile in den Anlagen der Halbleiterindustrie ohne Anpassung sichergestellt. Dies ermöglicht beispielsweise eine nachfolgende Beschichtung des Magazins und/oder der Mikrobauteile in einer Sputteranlage sowie eine vollautomatische Montage der Mikrobauteile in den Standardanlagen der Halbleitertechnik.

Der erfindungsgemäße Magazin-Formteil-Verbund ermöglicht eine vollautomatische Montage der Mikrobauteile, wobei ein Montagegreifer zum Einsatz kommt, wie nachfolgend noch beschrieben wird.

Das erfindungsgemäße Verfahren ermöglicht die Herstellung von unterschiedlichen Abmessungen von Mikrobauteilen und Magazin in einem Magazin-Formteil-Verbund und damit die flexible Anpassung des Magazins an die Mikrobauteile und/oder der Mikrobauteile an das Magazin, so daß alle beschriebenen Nachteile aus dem angegebenen Stand der Technik vermieden werden.

Erfindungsgemäß ist die Reihenfolge der Herstellung der Mikrobauteile und des Magazins nicht zwingend festgelegt, da die Abmessungen der Mikrobauteile und des Magazins durch die zum Einsatz kommenden Abformwerkzeuge vorgegeben werden. Daher können je nach Ausgestaltung der Mikrobauteile und des Magazins auch zuerst das Magazin und danach die Mikrobauteile hergestellt werden. Hierbei bleiben alle bereits beschriebenen Vorteile des obigen erfindungsgemäßen Verfahrens erhalten. Dieses erfindungsgemäße Verfahren zur abformtechnischen Herstellung und Magazinierung von mindestens einem mikrostrukturierten Formteil als Magazin-Formteil-Verbund ist durch folgende Prozeßschritte gekennzeichnet:
a. Abformtechnische Herstellung des Magazins unter Verwendung eines zunächst geschlossenen Werkzeuges, welches mindestens eine erste und eine zweite Werkzeughälfte aufweist;
b. Öffnen der beiden Werkzeughälften, wobei das Magazin in der ersten Werkzeughälfte verbleibt;
c. Wechseln zumindest der zweiten Werkzeughälfte gegen zumindest eine weitere Werkzeughälfte;
d. Abformtechnische Herstellung mindestens eines mikrostrukturierten Formteils unter Verwendung der das Magazin aufweisenden ersten Werkzeughälfte und der weiteren Werkzeughälfte;
e. Gemeinsames Entformen des Magazins und des Formteils als Magazin-Formteil-Verbund.

Nach einer ersten Ausgestaltung der Erfindung wird zur Herstellung des Magazins und/oder des Formteils im Werkzeug mindestens ein mikrostrukturierter Formeinsatz verwendet. Da es sich bei dem mikrostrukturierten Formeinsatz vorzugsweise um ein Mehrfachwerkzeug mit mehreren Kavitäten handelt, ist sichergestellt, daß eine Vielzahl von Mikrobauteilen pro Einspritzzyklus hergestellt werden kann.

Ein ganz besonderer Vorteil der Erfindung besteht darin, daß Formteil und Magazin mit unterschiedlichen Bauhöhen hergestellt werden. Hierdurch wird eine flexible Anpassung der Bauhöhe des Magazins an die Mikrobauteile ermöglicht, wobei je nach Ausgestaltung der Mikrobauteile entweder das Magazin oder die Mikrobauteile eine größere Höhe aufweisen. Damit können auch Mikrobauteile mit einer sehr geringen Bauhöhe mit einem Magazin mit einer weit höheren Bauhöhe in einem Magazin-Formteil-Verbund hergestellt werden. Dies verbessert die Stabilität des Magazins und damit die Handhabung der Mikrobauteile sowohl bei der Lagerung, dem Transport als auch bei der Montage.

Eine vorteilhafte Ausgestaltung der Erfindung besteht darin, daß das Magazin im Vergleich zur horizontalen Abmessung des Formteils mit seitlichem Überstand hergestellt wird. Hierdurch weist das Magazin frei strukturierbare Flächen auf, welche dem Greifer für die Handhabung des Magazins als Greiferansatzflächen dienen, ohne daß die Mikrobauteile angepackt werden müssen.

Ein anderer ganz besonderer Vorteil der Erfindung besteht darin, daß das Magazin in Haftkontakt mit Teilen der seitlichen Flächen des Formteiles hergestellt wird. Durch diese besondere Ausführungsform ist ein seitliches Ergreifen der Mikrobauteile, insbesondere durch einen Montagegreifer, ermöglicht, da der erfindungsgemäße Haftkontakt lediglich mit Teilen der seitlichen Flächen und nicht vollständig formschlüssig mit allen Seitenflächen des Mikrobauteiles hergestellt wird. Generell ist hierdurch ein Schutz der Mikrostrukturen der Mikrobauteile erreicht, da der Haftkontakt zwischen Magazin und Mikrobauteil auch an solchen seitlichen Flächen hergestellt werden kann, die keine Mikrostrukturen aufweisen. Ferner ist ein Schutz von auf der Stirn- und/oder Bodenfläche angeordneten mikrostrukturierten Flächen der Mikrobauteile erreicht.

Weiterhin verringert diese besondere Ausführungsform die Haftflächen zwischen Magazin und Mikrobauteil im Vergleich zu einem an allen Seiten formschlüssigen Einformen der Mikrobauteile. Hierdurch ist ein leichteres Lösen der Mikrobauteile aus dem Magazin ermöglicht, so daß die Herausnahme der Mikrobauteile aus dem Magazin sowohl durch Herausdrücken per Hand oder maschinell ohne großen Kraftaufwand erfolgen kann.

Schließlich können durch diese besondere Ausführungsform die Mikrobauteile nach beiden Seiten aus dem Magazin entnommen werden. Dies gilt sowohl für Mikrobauteile, die eine Verjüngung aufweisen, als auch für Mikrobauteile mit Hinterschnitten, da beispielsweise der Haftkontakt mit dem Magazin auch lediglich an der seitlichen Fläche des Mikrobauteiles mit größtem Durchmesser ausgebildet werden kann.

Ein Schutz für die zum Teil sehr kleinen mikrostrukturierten Flächen der Mikrobauteile wird auch dadurch erreicht, daß das Magazin in Haftkontakt mit den Mikrostrukturen des Formteils hergestellt wird. Der Haftkontakt gewährleistet hierbei das leichte Ablösen des Magazins von den mikrostrukturierten Flächen des Mikrobauteiles, ohne daß es hierbei zu einer Beschädigung der Mikrostrukturen, beispielsweise einem Abreißen, kommen kann.

Eine weitere besondere Ausgestaltung der Erfindung besteht darin, daß das Magazin mit Ausnehmungen hergestellt wird. Die Ausnehmungen werden vorzugsweise mit mikrostrukturierten Formeinsätzen, die Negativformen, wie beispielsweise Stufen, Säulen, Wandungen oder dgl. aufweisen, anliegend an die Seitenflächen der Mikrobauteile hergestellt. Hierdurch entstehen im Magazin und vorzugsweise direkt neben den Mikrobauteilen Ausnehmungen, also Freiflächen ohne Formstoff. Damit kann der Montagegreifer das Mikrobauteil an den gesamten durch die Ausnehmungen zugänglichen Seitenflächen und auch durch die Ausnehmung hindurch an der Boden- und Stirnfläche ergreifen. Selbstverständlich können die Ausnehmungen auch im Vergleich zur Bauhöhe des Magazins als Vertiefungen bzw. Greifertaschen im Magazin ausgebildet werden, wobei zumindest Teile der seitlichen Flächen des Mikrobauteiles weiterhin an das Magazin anbinden. Durch die Ausführungsform des Magazins mit Ausnehmungen werden die Haftflächen und damit die Haftkräfte zwischen dem Magazin und dem Mikrobauteil weiter reduziert, so daß der Lösevorgang zum Herausnehmen eines Mikrobauteils aus dem Magazin mit noch geringerem Kraftaufwand möglich ist. Ferner können auch ganze Seitenflächen des Mikrobauteiles im Magazin freiliegen, so daß hierdurch die Haftflächen zwischen Magazin und Mikrobauteil derart verringert werden, daß die Mikrobauteile aus dem Magazin mit noch geringerem Kraftaufwand herausgelöst werden können. Andererseits kann die Ausnehmung auch angrenzend an das Formteil mit einem solchen Umfang hergestellt werden, daß ein Mikrobauteil mit vollem Umfang aus dem Magazin entnehmbar ist. Hierzu wird dieses Mikrobauteil zunächst seitlich in der Ebene des Magazins bis in die Ausnehmung verschoben und dann durch vertikale Anhebung in der Ausnehmung aus dem Magazin entnommen. Selbstverständlich können die Ausnehmungen auch der Handhabung bzw. dem Erfassen des Magazins beim Transport, der Lagerung oder der Montage dienen.

Eine andere vorteilhafte Ausgestaltung der Erfindung besteht darin, daß das Magazin in Haftkontakt mit der Boden- oder der Stimfläche des Formteils hergestellt wird. Hierdurch wird ein Aufsitzen des Mikrobauteiles auf dem Magazin erreicht, so daß der Montagegreifer das Mikrobauteil an der gesamten Seitenfläche erfassen kann. Da der Haftkontakt vorzugsweise zwischen der unstrukturierten Boden- oder Stimfläche des Mikrobauteiles und dem Magazin ausgebildet wird, ist diese Ausführungsform des Magazins besonders vorteilhaft bei Mikrobauteilen ohne geeignete Seitenflächen für die Anformung des Magazins, wie beispielsweise bei Mikrobauteilen mit konischen oder konkaven oder andersartig gewölbten Seitenflächen, zu verwenden. Selbstverständlich ist auch hierdurch eine Magazinierung von Mikrobauteilen mit Hinterschnitten ermöglicht, da diese in einfacher Art und Weise von dem Magazin abgenommen werden können.

Um auch bei dieser Ausführungsform des Magazins die Haftkräfte noch weiter zu verringern und damit den Lösevorgang zu erleichtern, wird das Magazin in Haftkontakt mit Teilen der Boden- oder mit Teilen der Stimfläche des Formteils hergestellt. Durch diese Ausführungsform des Magazins wird auch das Herausdrücken des Mikrobauteils aus dem Magazin erleichtert.

Ein besonderes konstruktives Merkmal der Erfindung besteht darin, daß das Formteil und das Magazin mit gleichen oder unterschiedlichen Formstoffen hergestellt werden. Hierdurch sind unterschiedliche physikalische Eigenschaften und Funktionen des Magazins und des Formteils realisierbar und als Magazin-Formteil-Verbund miteinander kombinierbar, wie beispielsweise mechanische Festigkeit, optische Transparenz, Temperaturfestigkeit, Erweichungstemperatur sowie Haftung und Lösevermögen zwischen Magazin und Mikrobauteil.

Bei dem erfindungsgemäßen Verfahren gemäß Anspruch 2 dient das im Verfahrensschritt a. hergestellte Magazin in Art eines Formeinsatzes als seitliche Begrenzung bei den nachfolgenden Verfahrensschritten zur Herstellung der Mikrobauteile. Daher ist es auch im Sinne der Erfindung ein bereits hergestelltes Magazin zur Herstellung der Mikrobauteile in Art eines Formeinsatzes wieder zu verwenden. Diese Ausführungsform des erfindungsgemäßen Verfahrens zur abformtechnischen Herstellung und Magazinierung von mindestens einem mikrotechnisch hergestellten Formteil als Magazin-Formteil-Verbund ist durch folgende Prozeßschritte gekennzeichnet:
a. Abformtechnische Herstellung mindestens eines mikrostrukturierten Formteils unter Verwendung eines vorgefertigten Magazins;
b. Gemeinsames Entformen des Magazins und des Formteiles als Magazin-Formteil-Verbund.

Diese Ausführunngsform des erfindungsgemäßen Verfahrens besitzt im Vergleich zu den beiden zuerst beschriebenen Verfahren den besonderen Vorteil, daß der Abformprozeß zur Herstellung des Magazins entfällt. Hierdurch werden wesentlich kürzere Zykluszeiten zur Herstellung des Magazin-Formteil-Verbundes mit Mikrobauteilen erreicht. Ferner werden Kosten und Formstoff eingespart und eine Wiederverwendung von bereits entleerten Magazinen für die Herstellung von Mikrobauteilen ermöglicht. Die Wiederverwendung eines Magazins kann auch dazu führen, daß das Magazin bereits Strukturen bzw. Negativformen aufweist, welche zur nachfolgenden Herstellung des Mikrobauteils dienen. Hierdurch ist erreicht, daß der für die Herstellung des Mikrobauteils zu verwendende mikrostrukturierte Formeinsatz entsprechend einfacher gestaltet werden kann, so daß auch hierdurch Kosten und Zeit eingespart werden können. Ferner können die Mikrobauteile bei diesem Verfahren neben dem Zweikomponenten-Spritzgußverfahren auch mittels dem in der Mikrostrukturtechnik bekannten Verfahren des Heißprägens in ein Polymerstück hergestellt werden, da das Magazin den Ordnungzustand und die Position der Mikrobauteile als seitliche Begrenzung bei der abformtechnischen Herstellung der Mikrobauteile bereits vorgibt.

Als nachteilig bei diesem Verfahren kann angesehen werden, daß es zur Herstellung einer großen Anzahl von Mikrobauteilen eines Vorrats an Magazinen bedarf. Dieser Nachteil wird aber bereits durch die beschriebenen Vorteile kompensiert.

Ein für den Herstellungsprozeß besonderer Vorteil dieser Ausführungsform des erfindungsgemäßen Verfahrens besteht darin, daß ein geteiltes Werkzeug, welches mindestens eine erste und zweite Werkzeughälfte aufweist, verwendet wird. Hierdurch ist erreicht, daß das vorgefertigte Magazin in einfacher Art und Weise in eine der beiden Werkzeughälften eingelegt werden kann. Anschließend wird das Werkzeug geschlossen und die abformtechnische Herstellung der Mikrobauteile durchgeführt. Schließlich wird das Werkzeug geöffnet und das vorgefertigte Magazin mit darin eingeformten Mikrobauteilen als Magazin-Formteil-Verbund entformt.

Ein weiteres bevorzugtes Merkmal dieser Ausführungsform des erfindungsgemäßen Verfahrens besteht darin, daß als vorgefertigtes Magazin ein nach den Ansprüchen 1 oder 2 hergestelltes Magazin nach Entnahme der mikrostrukturierten Formteile verwendet wird. Damit ist eine Wiederverwendung des erfindungsgemäßen Magazins ermöglicht. Andererseits können selbstverständlich auch andere vorgefertigte Magazine, beispielsweise aus Metall, in diesem Verfahren wieder verwendet werden.

Das Magazin mit mindestens einem mikrostrukturierten Formteil, das als Magazin-Formteil-Verbund vorliegt, und das mit den bereits beschriebenen erfindungsgemäßen Verfahren nach einem der Ansprüche 1, 2 oder 12 hergestellt ist, bindet das Formteil unter Freilassung von Teilen seiner Oberfläche durch Haftkontakt an. Das Mikrobauteil ist nicht formschlüssig an seiner gesamten Seitenfläche sondern lediglich an Teilen seiner Seitenfläche an das Magazin angebunden, so dass das magazinierte Mikrobauteil seitliche Freiflächen aufweist. Ein besonderer Gedanke der Erfindung ist es, diese Freiflächen bei der Montage der Mikrobauteile vorzugsweise durch den Einsatz eines Montagegreifers für ein vollautomatisches Ergreifen der Mikrobauteile zu nutzen. Ein anderer Vorteil der Anbindung von lediglich Teilen der seitlichen Flächen des Mikrobauteiles an das Magazin besteht darin, dass in der Bauform kompliziertere Mikrobauteile mit Hinterschnitten und Mikrobauteile mit Verjüngungen derart magaziniert werden können, dass diese Mikrobauteile bei der Montage in beiden Richtungen aus dem Magazin entnehmbar sind. Beispielsweise gelingt dies, indem das Magazin das Mikrobauteil lediglich an der seitlichen Fläche mit größtem Durchmesser anbindet.

Durch die Herstellung nach einem der erfindungsgemäßen Verfahren kann das erfindungsgemäße Magazin die Mikrobauteile flexibel in jeder Bauteilhöhe und damit sowohl an den Seitenflächen und/oder der Stirnfläche und/oder der Bodenfläche anbinden. Der Haftkontakt kann hierbei formschlüssig mit der gesamten jeweiligen Fläche als auch lediglich mit Teilen der jeweiligen Fläche ausgeführt sein.

In einer bevorzugten Ausführungsform ist der Haftkontakt zwischen dem Magazin und einem oder mehreren Bereichen der Oberfläche des Mikrobauteiles derart ausgeführt, dass der Formstoff des Magazins keine chemische Verbindung mit dem Formstoff des Formteils eingeht, sondern vorzugsweise ein physikalischer Haftkontakt, beispielsweise durch Oberflächenrauhigkeiten oder thermisch bedingtes Anschmelzen, ausgebildet ist. Dies ermöglicht einen Lösevorgang der Mikrobauteile aus dem Magazin mit sehr geringem Kraftaufwand. Dieser erfindungsgemäße Haftkontakt ist besonders für eine vollautomatische Montage vorteilhaft, da beim Herausnehmen der Mikrobauteile nahezu keine Reaktionskräfte auf den Montagegreifer übertragen werden. Andererseits können die Mikrobauteile aber auch einfach per Hand oder maschinell aus dem Magazin herausgedrückt werden.

Eine besonders vorteilhafte Ausgestaltung der Erfindung besteht darin, dass das Magazin im Vergleich zum Formteil eine unterschiedliche Bauhöhe aufweist. Hierdurch ist eine flexible Anpassung der Bauhöhe des Magazins an die Bauhöhe des Mikrobauteiles ermöglicht. Beispielsweise können die Mikrobauteile mit einem Magazin mit einer weit größeren Bauhöhe magaziniert werden. Zum einen ist hierdurch eine Verbesserung der Stabilität des Magazins bzw. des Magazin-Formteil-verbundes und damit eine bessere Handhabung der Mikrobauteile beim Transport, der Lagerung und der Montage erreicht. Zum anderen ist diese besondere Ausführungsform des Magazins für eine Montage durch Herausdrücken der Mikrobauteile aus dem Magazin vorteilhaft, da das Magazin bzw. die kanalförmigen Wandungen des Magazins hierbei als Führungen für eine präzise Positionierung der Mikrobauteile dienen können.

Die Mikrobauteile können aber auch mit einem Magazin mit einer kleineren Bauhöhe magaziniert werden. Diese besondere Ausführungsform des Magazins reduziert die Haftfläche und damit die Haftkräfte zwischen Magazin und Mikrobauteile, so dass der Lösevorgang bei der Herausnahme des Mikrobauteils aus dem Magazin mit entsprechend geringerem Kraftaufwand auskommt. Ferner stellt dies eine besonders wirtschaftliche Ausführungsform des Magazins dar, da hierdurch bei der bevorzugten abformtechnischen Herstellung des Magazins Formstoff und damit auch Zykluszeit eingespart wird.

Um eine vollautomatische Montage der Mikrobauteile in einer Fertigungslinie der Halbleiterindustrie zu ermöglichen, weist das Magazin vorteilhaft eine Waferform in einem für die Halbleitertechnik üblichen Standardformat auf. Hierdurch ist auch eine Weiterverarbeitung der Mikrobauteile und/oder des Magazins in der Fertigungslinie der Halbleitertechnik ermöglicht. Beispielsweise kann eine nachfolgende Beschichtung des Magazins und/oder der Mikrobauteile in einer Sputteranlage erfolgen oder es können auch weitere Teile, beispielsweise Elektroden, an das Mikrobauteil angebondet werden.

Ein besonderer Vorteil der Erfindung besteht darin, dass das Magazin das Formteil an den mikmstrukturierten Flächen anbindet. Hierdurch wird ein Schutz der sehr kleinen und damit leicht zu beschädigenden Mikrostrukturen des Mikrobauteils, insbesondere bei der Lagerung und beim Transport des Magazins, erreicht. Die erfindungsgemäße Anbindung der Formteile an das Magazin durch Haftkontakt stellt hierbei sicher, dass das Magazin mit geringem Kraftaufwand von den Mikrobauteilen abgelöst werden kann, ohne daß es hierbei zu einer Beschädigung des Mikrobauteils kommen kann.

Eine andere besondere Ausgestaltung des Magazins besteht darin, daß das Magazin angrenzend an die seitlichen Flächen des Formteils mindestens eine Ausnehmung aufweist. Hierdurch werden angrenzend an die Mikrobauteile Freiflächen ohne Formstoff im Magazin gebildet, so daß der Montagegreifer das Mikrobauteil im Bereich dieser Ausnehmungen an der gesamten Seitenfläche ergreifen kann. Darüber hinaus ermöglichen diese Freiflächen, daß der Montagegreifer das Mikrobauteil durch die Ausnehmung hindurch an der Bodenfläche des Mikrobauteiles ergreifen kann. Ferner erleichtert diese besondere Ausführungsform des Magazins mit Ausnehmungen auch das Ablösen der Mikrobauteile vom Magazin, da lediglich Teile der seitlichen Flächen des Mikrobauteils vom Magazin und nicht beispielsweise die gesamten Seitenflächen des Mikrobauteils vom Magazin abgelöst werden müssen. Damit wird auch eine höhere Geschwindigkeit des Montagevorgangs erzielt. Selbstverständlich können die Ausnehmungen auch beim Transport, bei der Lagerung oder bei der Montage als Greifertasche zum Erfassen des Magazins genutzt werden. Ferner können die Ausnehmungen einen derart großen Außenumfang besitzen, daß auch Mikrobauteile mit Hinterschnitten oder Verjüngungen im vollen Umfang durch die Ausnehmungen in beiden. Richtungen aus dem Magazin entnehmbar sind. Um die Stabilität des Magazins bzw. des Magazin-Formteil-Verbunds zu erhalten, kann beispielsweise das Magazin auf einer Seite des Mikrobauteiles formschlüssig an das Mikrobauteil anschließen und auf der anderen Seite eine Ausnehmung aufweisen.

Eine besonders einfache Ausgestaltung des Magazins besteht darin, daß das Magazin das Formteil vollflächig an der Boden- oder der Stirnfläche anbindet. Hierbei ermöglicht der erfindungsgemäße Haftkontakt ein Aufsitzen des Mikrobauteiles auf dem Magazin, so daß der Montagegreifer das Mikrobauteil an der gesamten Seitenfläche erfassen kann. Da der Haftkontakt vorzugsweise zwischen der unstrukturierten Boden- oder Stirnfläche des Mikrobauteiles und dem Magazin ausgebildet wird, ist diese Ausführungsform des Magazins insbesondere bei Mikrobauteilen ohne geeignete Seitenflächen für die Anformung des Magazins, wie beispielsweise bei Mikrobauteilen mit konischen oder konkaven oder andersartig gewölbten Seitenflächen, zu verwenden. Selbstverständlich ist auch hierdurch eine Magazinierung von Mikrobauteilen mit Hinterschnitten ermöglicht, da diese in einfacher Art und Weise von dem Magazin abgenommen werden können.

Um den Ablösevorgang der Mikrobauteile vom Magazin auch bei dieser Ausführungsform des Magazins mit noch geringeren Kräften zu ermöglichen, besteht eine weitere Ausführungsform des Magazins darin, daß das Magazin das Formteil an Teilen der Boden- oder Teilen der Stirnfläche anbindet. Da hierdurch lediglich Teile und nicht die gesamte Boden- oder Stirnfläche mit dem Magazin in Haftkontakt steht, wird auch das Herausdrücken des Mikrobauteils aus dem Magazin erleichtert.

Für die Fertigung des Magazins ist von besonderem Vorteil, daß das Magazin und das Formteil abformtechnisch nach Art der Verfahren des Anspruches 1 oder 2 hergestellt ist. Dies gewährleistet eine besonders preiswerte Fertigung großer Stückzahlen der erfindungsgemäßen Magazine mit Mikrobauteilen. Ferner ist durch das vorzugsweise einzusetzende Zweikomponenten-Spritzgußverfahren der Einsatz verschiedener Formstoffe für die abformtechnische Herstellung der Mikrobauteile und des Magazins ermöglicht. Selbstverständlich können die Mikrobauteile und das Magazin aber auch mit dem gleichen Formstoff hergestellt werden.

Ein ganz besonderer Gedanke der Erfindung besteht darin, daß das Magazin nach Entnahme der Mikrobauteile in dem Verfahren nach Anspruch 12 als vorgefertigtes Magazin wieder verwendbar ist. Hierbei dient das entleerte Magazin in Art eines Formteils als seitliche Begrenzung und gibt so die äußere Form des Mikrobauteils vor. Damit liegt es auch im Sinne der Erfindung, daß mit einem anderen Werkzeug ein unterschiedliches Mikrobauteil mit beispielsweise gleichem oder kleinerem Umfang aber anderer Funktion in das wieder zu verwendende Magazin eingeformt oder mittels dem Verfahren des Heißprägens eingeprägt werden kann.

Ein anderer ganz besonderer Gedanken der Erfindung besteht darin, daß das Magazin mehrere Formteile beabstandet zueinander anbindet. Hierdurch sind im erfindungsgemäßen Magazin mehrere Mikrobauteile mit reproduzierter Ausrichtung und hoher Positions- und Lagegenauigkeit zueinander magaziniert. Dies ermöglicht die gleichzeitige Montage einer Vielzahl von Mikrobauteilen mit sehr kleinen Montagetoleranzen und damit eine Optimierung der Greiferwege und eine Erhöhung der Montagegeschwindigkeit.

Weitere Ziele, Vorteile, Merkmale und Anwendungsmöglichkeiten der vorliegenden Erfindung ergeben sich aus der nachfolgenden Beschreibung von mehreren Ausführungsbeispielen anhand der Zeichnungen.

Es zeigen:
- Figur 1: a) eine Draufsicht und b) einen Schnitt eines mikrostrukturierten Bauteiles.
- Figur 2: Werkzeug zur abformtechnischen Herstellung des Mikrobauteils aus Figur 1 und gemäß dem Schritt a aus Anspruch 1.
- Figur 3: Werkzeugöffnung gemäß dem Schritt b. aus Anspruch 1.
- Figur 4: Wechsel der zweiten Werkzeughälfte gegen eine weitere Werkzeughälfte gemäß dem Schritt c. aus Anspruch 1.
- Figur 5: Abformtechnische Herstellung des Magazins gemäß dem Schritt d. aus Anspruch 1.
- Figur 6: Werkzeugöffnung gemäß dem Schritt e. aus Anspruch 1 und Entformung des Magazins mit mehreren Mikrobauteilen als Magazin-Formteil-Verbund.
- Figur 7: a) Draufsicht und b) einen Schnitt des Magazins gemäß Figur 6.
- Figur 8: einen Schnitt eines Bereichs eines Magazins, wobei das Magazin an den Mikrostrukturen des Mikrobauteils gemäß Figur 1 anbindet und eine höhere Bauhöhe im Vergleich zu diesem Mikrobauteil aufweist.
- Figur 9: a) Draufsicht und b) einen Schnitt eines Bereichs des Magazins gemäß Figur 7 mit im Magazin seitlich an den Mikrobauteilen angeordneten Ausnehmungen.
- Figur 10: a) eine Draufsicht und b) einen Schnitt eines zweistufigen Mikrozahnrades.
- Figur 11: a) Draufsicht und einen b) Schnitt eines Magazins mit mehreren Mikrozahnrädem gemäß Figur 10 als Magazin-Formteil-Verbund.
- Figur 12: a) Draufsicht und einen b) Schnitt eines Bereichs eines Magazins, wobei das Magazin an der ersten Stufe des Mikrozahrades gemäß Figur 10 anbindet und eine höhere Bauhöhe im Vergleich zu diesem Mikrozahnrad aufweist.
- Figur 13: a) Draufsicht und einen b) Schnitt eines Magazins mit mehreren Mikrobauteilen gemäß Figur 1 als Magazin-Formteil-Verbund, wobei das Magazin an den Bodenteilen der Mikrobauteile anbindet.
- Figur 14: a) Draufsicht und einen b) Schnitt eines Magazins gemäß Figur 13 mit im Magazin unterhalb der Mikrobauteile angeordneten Ausnehmungen.

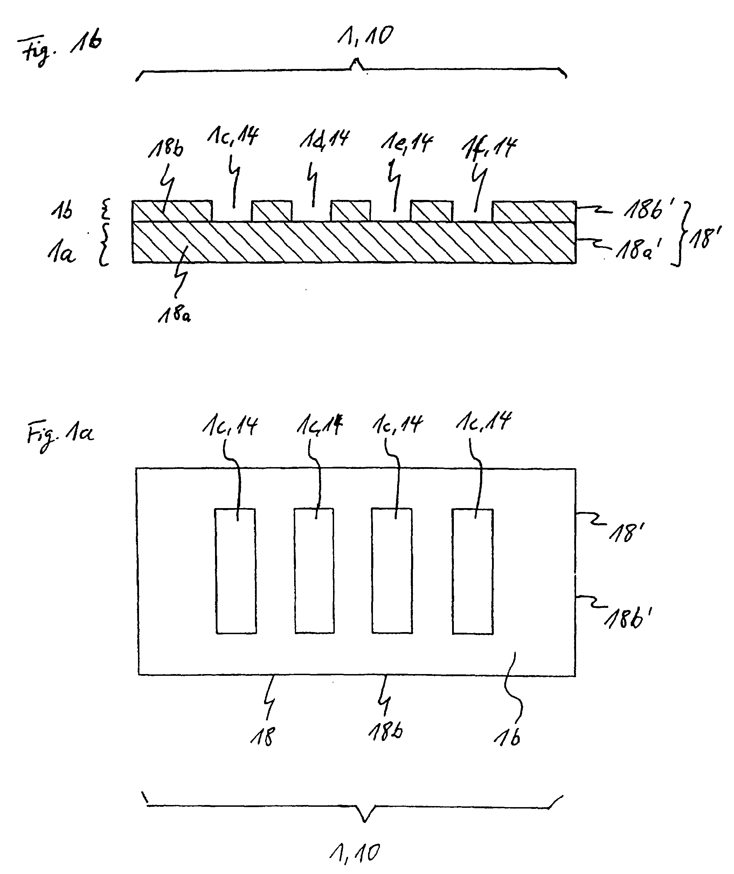

In der Figur 1 ist ein erstes Ausführungsbeispiel eines mit dem erfindungsgemäßen abformtechnischen Verfahren hergestellten Mikrobauteils 1, 10 dargestellt. Dieses Mikrobauteil 1, 10 weist eine rechteckige Form mit Seitenflächen 18 und 18' auf und besteht aus zwei Funktionsteilen 1a und 1b, einem unstrukturierten Bodenteil 1a und einem mikrostrukturierten Stimteil 1b. Das Stirnteit 1b weist vier in gleichem Abstand nebeneinander angeordnete Mikrostrukturen 14 in Form von Senken 1c-f auf. Gemäß Figur 1b tragen die Seitenflächen des Bodenteils 1a die Bezugszeichen 18a, 18a' und entsprechend die Stirnfläche 1b die Bezugszeichen 18b,18b'.

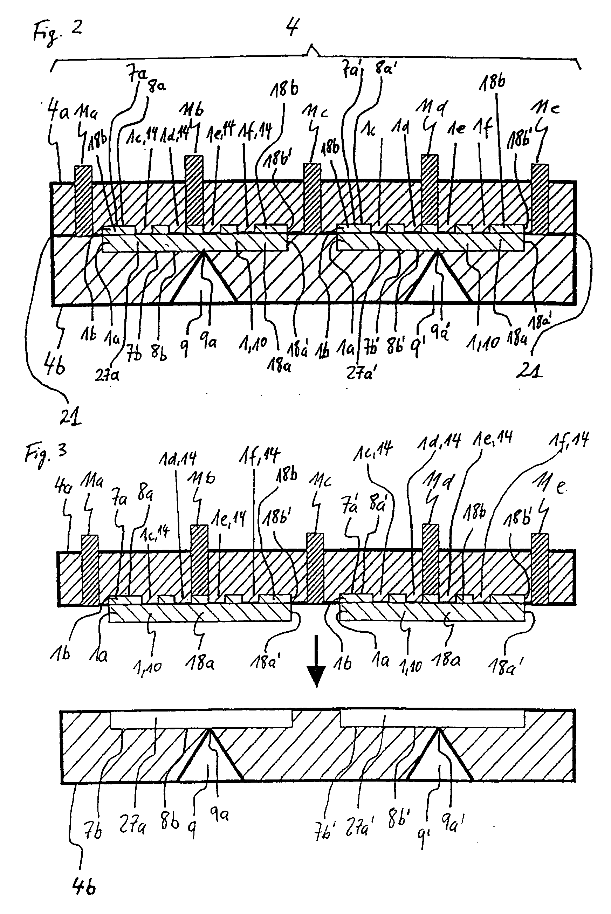

Die Figuren 2 bis 6 stellen eine bevorzugte Ausführungsform des erfindungsgemäßen Verfahrens zur abformtechnischen Herstellung und Magazinierung von vorzugsweise einer Vielzahl von Mikrobauteilen 1, 10 in seinen aufeinanderfolgenden Verfahrensschritten dar. Ferner ist das bei dem erfindungsgemäßen Verfahren vorzugsweise einzusetzende Zweikomponenten-Spritzgußwerkzeug 4, welches aus zwei separaten Werkzeughälften 4a, 4b besteht, dargestellt. Bei dem hier gewählten Ausführungsbeispiel ist die Werkzeughälfte 4a als bewegliche Schließseite zum Öffnen und Schließen der beiden Werkzeughälften 4a, 4b ausgeführt und mit einer nicht dargestellten Schließeinrichtung verbunden. Die Werkzeughälfte 4b ist als Angußseite ausgebildet und steht hierzu mit einer ebenfalls nicht dargestellten Spritzgußmaschine in Verbindung.

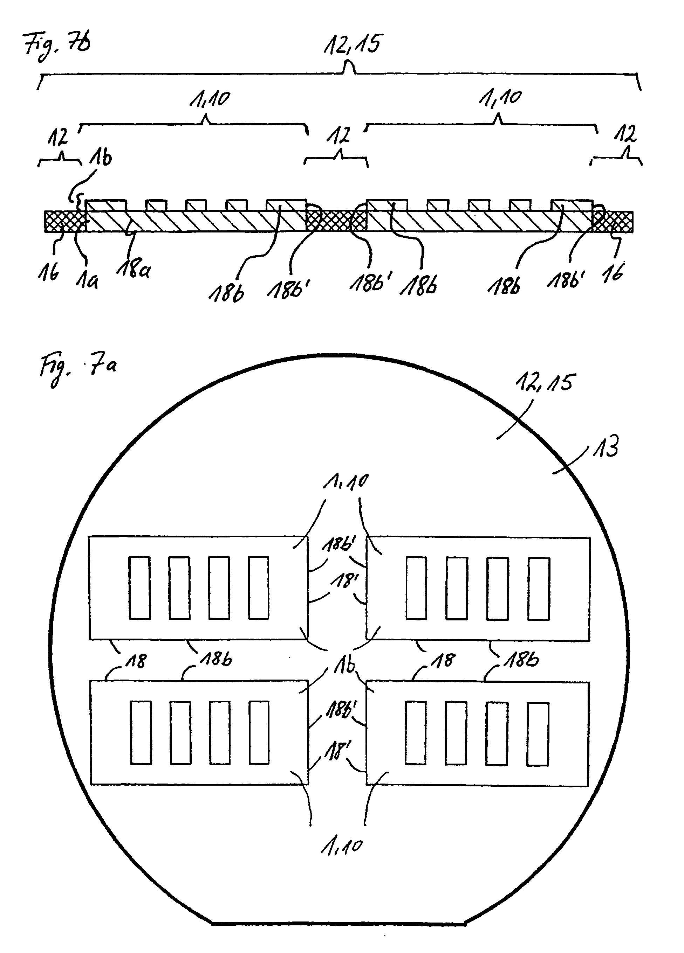

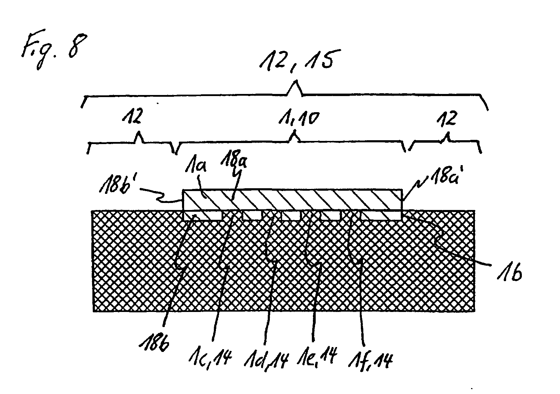

Die Figur 2 stellt den bei dieser Ausführungsform ersten Schritt des erfindungsgemäßen Verfahrens dar, wobei das Spritzgußwerkzeug 4 als Mehrfachwerkzeug ausgeführt ist, um die abformtechnische Fertigung von mehreren der bereits beschriebenen rechteckigen Mikrobauteile 1, 10 pro Einspritzzyklus zu ermöglichen. Hierzu befindet sich das geteilte Spritzgußwerkzeug 4 im dicht abgeschlossenen Betriebszustand, wobei die beiden Werkzeughälften 4a, 4b in einer Trennebene 21 zusammenschließen. Bei dem hier gewählten Ausführungsbeispiel weisen die beiden Werkzeughälften 4a, 4b mehrere passend zueinander beabstandet angeordnete schließseitige Formaufnahmen 7a und 7a' und angußseitige Formaufnahmen 7b und 7b' auf. Durch diese Ausführungsform können bei dem hier gewählten Ausführungsbeispiel im Spritzgußwerkzeug 4 vier Mikrobauteile 1, 10 separat und beabstandet voneinander hergestellt werden, wie dies die Figur 7 verdeutlicht.

Mit dem Spritzgußwerkzeug 4 werden die Mikrobauteile 1, 10 einstückig mit einem Formstoff spritzgegossen. Für die Abformung des Stirnteils 1b mit mehreren Mikrostrukturen 14 ist in den schließseitigen Formaufnahmen 7a, 7a' jeweils ein mikrostrukturierter Formeinsatz 8a und 8a' angeordnet. Für die Abformung des unstrukturierten rechteckigen Bodenteils 1a ist in den angußseitigen Formaufnahmen 7b, 7b' jeweils ein Formeinsatz 8b und 8b' angeordnet. Bei dem hier gewählten Ausführungsbeispiel sind die Formeinsätze 8b und 8b' als Wannen 27a und 27a'ausgeführt, wie dies insbesondere auch die Figur 3 veranschaulicht.

Für den Anschluß der angußseitigen Werkzeughälfte 4b an die Spritzgußmaschine ist der Boden jeder Wanne 27a und 27a' jeweils mit einem Angußkanal 9 und 9' verbunden. Diese Angußkanäle 9, 9' weisen einen sich zur Wanne 27a, 27a' hin verjüngenden Querschnitt bzw. Anschnitt 9a, 9a' auf, so daß der Formstoff von der Düse der Spritzgußmaschine, beispielsweise über ein nicht dargestelltes Verteilersystem oder eine Angußbuchse, in die zugehörige angußseitige Wanne 27a, 27a' und damit separat und gegenüberliegend zu dem jeweiligen schließseitig angeordneten mikrostrukturierten Formeinsatz 8a, 8a' einströmt. Hierdurch ist ein gleichmäßiges Verteilen und Einfüllen des Formstoffes in die Wannen 27a, 27a' und die Formeinsätze 8a, 8a' sichergestellt.

Durch diese besondere Ausführungsform, wobei separat in jeden Formeinsatz 8a, 8a' zur Herstellung eines Mikrobauteiles 1, 10 Formstoff eingespritzt wird, sind Mikrobauteile 1, 10 mit Mikrostrukturen 14 im Bereich von 10 µm abformbar. Ferner sind die Bauteilhöhen der Bodenteile 1a der vier Mikrobauteile 1, 10 durch die Bauhöhe der wannenförmigen Formeinsätze 7b, 7b' und die Bauteilhöhen der Stirnteile 1b durch die Bauteilhöhen der mikrostrukturierten Formeinsätze 7a, 7a' vorgeben. Dies ermöglicht eine flexible abformtechnische Fertigung der Mikrobauteile 1, 10, seiner Funktionsteile 1a und 1b sowie der Mikrostrukturen 14 mit verschiedenen Bauteilhöhen.

Als Formstoff werden für die Herstellung der Mikrobauteile 1, 10 verschiedene Kunststoffe, insbesondere Thermoplaste, wie beispielsweise Polystyrol (PS), Polypropylen (PP), Polyethylen (PE), Cycloolefincopolymer (COC), Polymethylmethacrylat (PMMA), Polycarbonat (PC), Polyoxymethylen (POM), Polysulfone (PSU), Polyphenyleneether (PPE), Polyetheretherketone (PEEK), Polyetherimid (PEI), Polybutylenterephthalat (PBT), Polyacrylate, eigenverstärkende teilkristalline Polymere (LCP), verwendet. Diese Formstoffe gewährleisten eine reproduzierbare Herstellung der Mikrobauteile 1, 10 in großen Stückzahlen, wobei generell die Auswahl des jeweiligen Formstoffes sich nach der Funktion des zu fertigenden Mikrobauteils 1, 10 richtet. Hierbei werden die verschiedenen physikalischen Eigenschaften dieser Formstoffe, wie beispielsweise Festigkeit, optische Transparenz, Temperaturfestigkeit und Erweichungstemperatur sowie ein Formschwund des Formstoffes berücksichtigt.

Die Figur 3 stellt den zweiten Verfahrensschritt des gewählten Ausführungsbeispieles dar. Hierbei wird das Spritzgußwerkzeug 4 soweit geöffnet, bis eine vollständige Trennung der Werkzeughälfte 4a und 4b erreicht ist. Wie die Figur 3 zeigt, verbleiben bei dieser Werkzeugöffnung die bereits hergestellten Mikrobauteile 1, 10 in den schließseitig separat und beabstandet angeordneten mikrostrukturierten Formeinsätzen 8a, 8a'. Gemäß Figur 3 stehen bei dem hier gewählten Ausführungsbeispiel lediglich die Stimteile 1b der Mikrobauteile 1, 10 in direktem Kontakt mit den Formeinsätzen 8a, 8a' und die Bodenteile 1a der Mikrobauteile 1, 10 stehen aus der Werkzeughälfte 4a frei heraus.

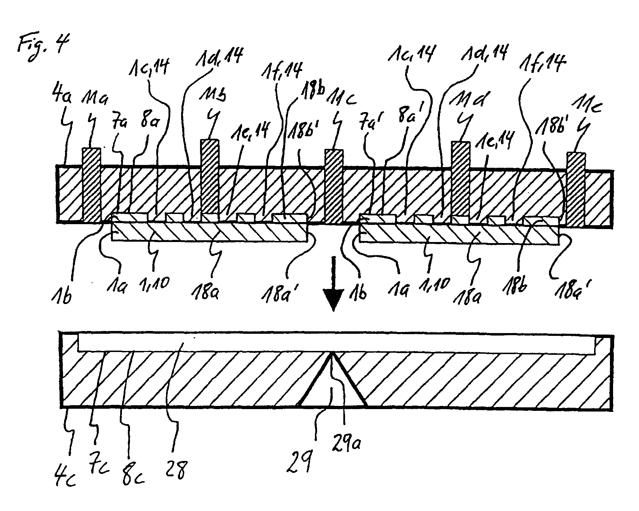

Nachfolgend findet im dritten Verfahrensschritt gemäß Figur 4 ein Wechsel der angußseitigen Werkzeughälfte 4b gegen eine weitere angußseitige Werkzeughälfte 4c statt, wie dies ein Vergleich der Figur 3 mit der Figur 4 verdeutlicht. Dieser Wechsel der angußseitigen Werkzeughälfte dient der abformtechnischen Herstellung des erfindungsgemäßen Magazins 12. Hierzu weist die Werkzeughälfte 4c eine weitere angußseitige Formaufnahme 7c auf, welche bei dem hier gewählten Ausführungsbeispiel als eine über den gesamten Querschnitt ausgedehnte und unstrukturierte Wanne 28 ausgeführt ist. Am Boden der Wanne 28 ist ein weiterer Angußkanal 29 mit Anschnitt 29a angeordnet, um den Anschluß der angußseitigen Werkzeughälfte 4c an die bisher verwendete oder eine weitere zweite Spritzgußmaschine zu ermöglichen. Bei ersterem wird der bisher verwendete Formstoff auch zur Herstellung des Magazins 12 verwendet und bei letzterem bevorzugten Zweikomponenten-Spritzgußverfahren wird das Magazin 12 mit einem anderen zweiten Formstoff hergestellt.

Die Figur 5 zeigt den vierten Verfahrensschritt, wobei die abformtechnische Herstellung des erfindungsgemäßen Magazins 12 erfolgt. Hierzu werden zunächst die beiden Werkzeughälften 4a und 4c geschlossen. Durch diesen Schließvorgang des Spritzgußwerkzeuges 4 gelangen die aus den schließseitigen mikrostrukturierten Formeinsätzen 8a und 8a' frei herausstehenden Bodenteile 1a der Mikrobauteile 1, 10 in die Wanne 28 der Werkzeughälfte 4c. Der mit dem Boden der Wanne 28 verbundene weitere Angußkanal 29 mit Anschnitt 29a ist zwischen den Mikrobauteilen 1, 10 so angeordnet, daß der Formstoff von der Düse der zweiten Spritzgußmaschine in die Wanne 28 einströmt und hierbei die Mikrobauteile 1, 10 an allen in der Wanne 28 freiliegenden Seitenflächen formschlüssig umspült. Hierzu ist gemäß Figur 5 der Querschnitt der Wanne 28 horizontal so bemessen, daß ein seitlicher Überstand 16 des Magazins 12 über die Mikrobauteile 1, 10 hinaus mit der Funktion eines freistrukturierbaren Magazinrandes gefertigt werden kann.

Bei dem hier gewählten Ausführungsbeispiel weist die Wanne 28 gerade eine solche Bauhöhe auf, daß diese der Bauhöhe der Bodenfläche 1a des Mikrobauteils 1, 10 entspricht. Hierdurch werden bei diesem Ausführungsbeispiel gerade die Bodenteile 1a der Mikrobauteile 1, 10 von der Wanne 28 umschlossen. Dies stellt sicher, daß bei dem hier gewählten Ausführungsbeispiel lediglich die Seitenflächen 18a und 18a' der Bodenteile 1a formschlüssig eingeformt werden können, die Seitenflächen 18b, 18b' der Stirnteile 1b der Mikrobauteile 1, 10 aber frei bleiben. Der Vorteil dieser Ausführungsform des Magazins 12 besteht darin, daß die Mikrobauteile nur partiell, also nur mit Teilen der Seitenflächen 18, 18' des Mikrobauteils 1, 10 und nicht mit den gesamten Seitenflächen 18, 18' des Mikrobauteils 1, 10, an das Magazin 12 angebunden sind. Nach der Entformung des Magazins 12 aus dem Spritzgußwerkzeug 4 gemäß Figur 7, ermöglicht dies ein seitliches Ergreifen der Mikrobauteile 1, 10, insbesondere durch einen Montagegreifer, an den dann freiliegenden seitlichen Flächen 18b, 18b' des Stirnteiles 1b. Dies schützt die auf der Stirnfläche 1b angeordneten Mikrostrukturen 14 sowohl beim Transport, der Lagerung als auch bei der Montage.

Ein weiterer Vorteil dieser partiellen Anbindung von lediglich Teilen der Seitenflächen der Mikrobauteile 1, 10 an das Magazin 12 besteht darin, daß die Kontaktflächen zwischen dem Magazin 12 und den Mikrobauteilen 1, 10 im Vergleich zu einer an allen Seitenflächen förmschlüssigen Einformung reduziert werden. Allein hierdurch ist ein leichteres Lösen der Mikrobauteile 1, 10 aus dem Magazin 12 ermöglicht. Erfindungsgemäß wird die Lösbarkeit der Mikrobauteile 1, 10 aus dem Magazin 12 aber auch dadurch verbessert, daß hierzu geeignete Kombinationen von zwei Formstoffen zur Herstellung der Mikrobauteile 1, 10 und des Magazins 12 verwendet werden.

Für die Herstellung des Magazins 12 werden vorzugsweise Thermoplast-Kunststoffe, wie beispielsweise Polyoxymethylen (POM), Polymethylmethacrylat (PMMA), Polycarbonat (PC), Polyamid (PA) oder Polyethylen (PE) verwendet. Hierbei ermöglichen die amorphen Thermoplasten die Herstellung von durchsichtigen Magazinen und die teilkristallinen Thermoplasten die Herstellung von undurchsichtigen Magazinen. In einer anderen besonderen Ausführungsform besteht das Magazin aus einem Elastomere-Kunststoff. In weiteren besonderen Ausführungsformen besteht das Magazin 12 aus Kunststoff mit gebinderten Metallbestandteilen, Graphitbestandteilen oder einem Kunststoff mit keramischen Bestandteilen. Die Verwendung eines Kunststoffs mit gebinderten Metallbestandteilen ermöglicht insbesondere die Verwendung eines Magnetgreifers zum Erfassen des Magazins 12.

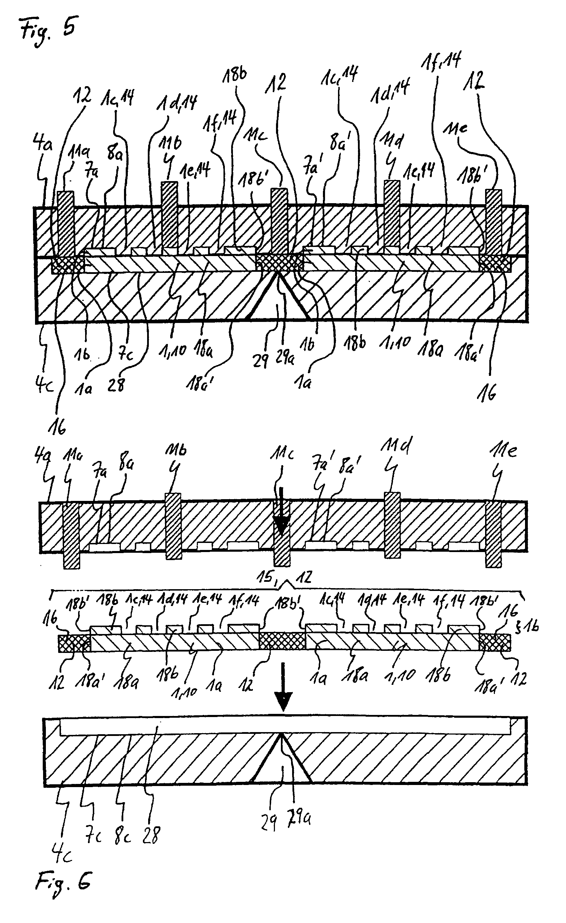

Die Figur 6 zeigt den fünften und letzten Verfahrensschritt, wobei das Magazin 12 und die darin eingeformten Mikrobauteile 1, 10 gemeinsam als Magazin-Formteil-Verbund 15 entformt werden. Hierzu wird zunächst das Spritzgußwerkzeug 4 geöffnet, indem die schließseitige Werkzeughälfte 4a in Öffnungsstellung gefahren wird. Hierbei verbleibt das Magazin 12 mit Mikrobauteilen 1, 10 als Magazin-Formteil-Verbund 15 in den schließseitigen mikrostrukturierten Formeinsätzen 8a und 8a'. Danach erfolgt das Entformen des Magazin-Formteil-Verbunds 15 aus diesen Formeinsätzen 8a und 8a' in Richtung der Werkzeughälfte 4c mit Hilfe mehrerer beweglich an der Werkzeughälfte 4a angeordneter Auswerferstifte 11a-e.

Die Figuren 7a und 7b zeigen eine Draufsicht und einen Schnitt des Magazins 12 mit Mikrobauteilen 1, 10 als Magazin-Formteil-Verbund 15 direkt nach der Entformung aus dem Spritzgußwerkzeug 4. Die Figur verdeutlicht einen ganz besonderen Vorteil des erfindungsgemäßen Verfahrens, nämlich daß keine Nachbearbeitung des Magazins 12 im Hinblick auf eine Montage der Mikrobauteile 1, 10 notwendig ist. Dies wird erfindungsgemäß dadurch erreicht, daß das Spritzgußwerkzeug 4 und insbesondere die darin verwendeten Formeinsätze 8a und 8a' den Ordnungszustand der Mikrobauteile 1, 10 mit definierter Position und damit definierter Lage verschiedener Mikrobauteile 1, 10 zueinander vorgeben. Da vorzugsweise direkt nachfolgend in einer Werkzeugaufspannung die abformtechnische Herstellung des Magazins 12 durchgeführt wird, werden sehr geringe Lage- und Positionstoleranzen der Mikrobauteile 1, 10 im Magazin 12 erzielt, so daß die Positionen und die relative Lage der Mikrobauteile 1, 10 schon präzise nach der Herstellung des erfindungsgemäßen Magazins 12 und vor der Montage der Mikrobauteile bekannt sind. Darauf aufbauend kann eine sehr präzise vollautomatische Montage einer Vielzahl von Mikrobauteilen 1, 10 vorzugsweise mit einem Montagegreifer mit vergleichbar sehr geringen Montagetoleranzen und Aufwand durchgeführt werden. Hierbei verbessert der Einsatz eines Montagegreifers nochmals die Präzision der Montage, da dies ein sicheres und schnelles Ergreifen der Mikrobauteile 1, 10 sicherstellt.

Die Figur 7a zeigt, daß das Magazins 12 bei dem hier gewählten Ausführungsbeispiel im Format eines Wafers 13 hergestellt ist. Durch diese Waferform 13 wird ein Anschluß an die Fertigungslinie der Halbleiterindustrie und deren Anlagen ermöglicht, so daß hierdurch auch eine nachfolgende Weiterverarbeitung des Magazins 12 und/oder der Mikrobauteile 1, 10 erfolgen kann. Beispielsweise kann so in einer Sputteranlage eine Beschichtung der Mikrobauteile 1, 10 und/oder des Magazins 12 vorgenommen werden. Die Figur 7b zeigt, daß bei dem hier gewählten Ausführungsbeispiel des Magazins 12, die Mikrobauteile 1, 10 nach beiden Seiten aus dem Magazin 12 entnehmbar sind. Dies ermöglicht eine zweite bevorzugte Art der Montage der Mikrobauteile 1, 10, wobei die Mikrobauteile 1, 10 per Hand oder maschinell aus dem Magazin 12 herausgedrückt werden.

Ein ganz besonderer Vorteil des erfindungsgemäßen Verfahrens zur Herstellung des erfindungsgemäßen Magazins 12 besteht darin, daß unterschiedliche vertikale Abmessungen von Mikrobauteilen 1, 10 und Magazin 12 hergestellt werden können. Die Figur 7b zeigt, daß das Magazin 12 bei dem hier dargestellten Ausführungsbeispiel eine niedrigere Bauhöhe im Vergleich zu den Mikrobauteilen 1, 10 aufweist.

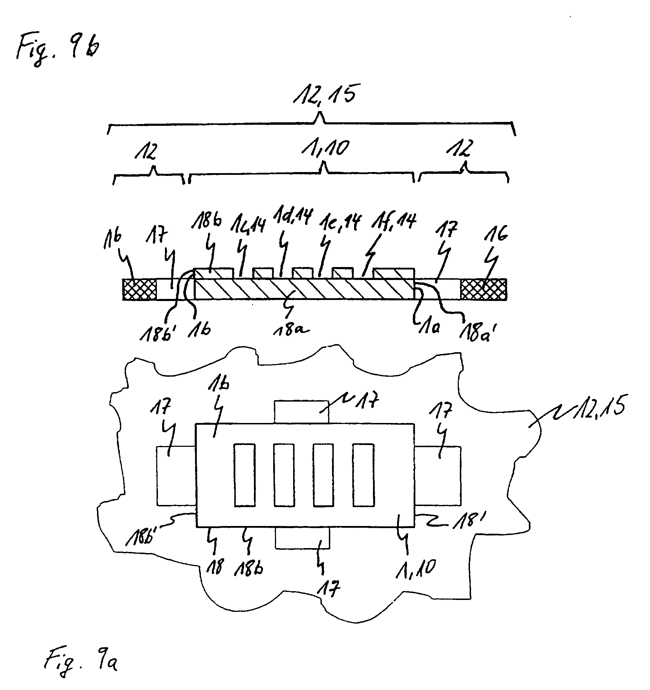

Die Figur 8 zeigt einen Schnitt eines Bereichs eines weiteren besonderen Ausführungsbeispiels des erfindungsgemäßen Magazins 12, wobei das Magazin 12 mit einer im Vergleich zu den Mikrobauteilen 1 deutlich höheren Bauhöhe lediglich an den Mikrostrukturen 14 des Stimteils 1b des Mikrobauteils 1, 10 anbindet. Bei diesem Ausführungsbeispiel liegen im Magazin 12 die seitlichen Flächen 18a, 18a' der Bodenteile 1a der Mikrobauteile 1,10 frei und können so durch einen Montagegreifer ergriffen werden. Diese Ausführungsform dient zum Schutz der auf dem Stimteil 1b angeordneten Mikrostrukturen 14 in Form von Senken 1c-f und verbessert die Stabilität und damit die Handhabung des Magazins 12.

Zur Herstellung dieser Ausführungsform des erfindungsgemäßen Magazins 12 bedarf es eines geänderten Spritzgußwerkzeuges, wobei nun die Bodenteile 1a in der schließseitigen Werkzeughälfte 4a und die Stirnteile 1b mit Mikrostrukturen14 in der angußseitigen Werkzeughälfte 4b gefertigt werden. Hierzu werden in die angußseitig angeordneten Formaufnahme 7b, 7b' die mikrostrukturierten Formeinsätze 8a, 8a' und in die schließseitig angordneten Formaufnahmen 7a, 7a' die wannenförmigen Formeinsätze 8b, 8b' eingesetzt. Ferner wird beim Wechsel der angußseitigen Werkzeughälfte 4b gegen die weitere Werkzeughälfte 4c mit Wanne 28 sichergestellt, daß die Mikrobauteile 1, 10 nun in den wannenförmigen Formeinsätzen 8b, 8b' und nicht wie zuvor in den mikrostrukturierten Formeinsätzen 8a, 8a' hängenbleiben. Dies kann beispielsweise dadurch erreicht werden, daß nun auch in der angußseitigen Werkzeughälfte 4b entsprechend mehrere Auswerferstifte 11 angeordnet werden, die hier lediglich zum Lösen der Mikrobauteile 1, 10 nach deren Herstellung dienen. Schließlich ist zur abformtechnischen Herstellung des Magazins 12 gemäß Figur 8 die Bauhöhe der eingewechselten Wanne 28 in der weiteren Werkzeughälfte 4c höher im Vergleich zu den aus den schließseitigen wannenförmigen Formeinsätzen 8b und 8b' herausstehenden Mikrostrukturen 14 der Mikrobauteile 1, 10 ausgebildet.

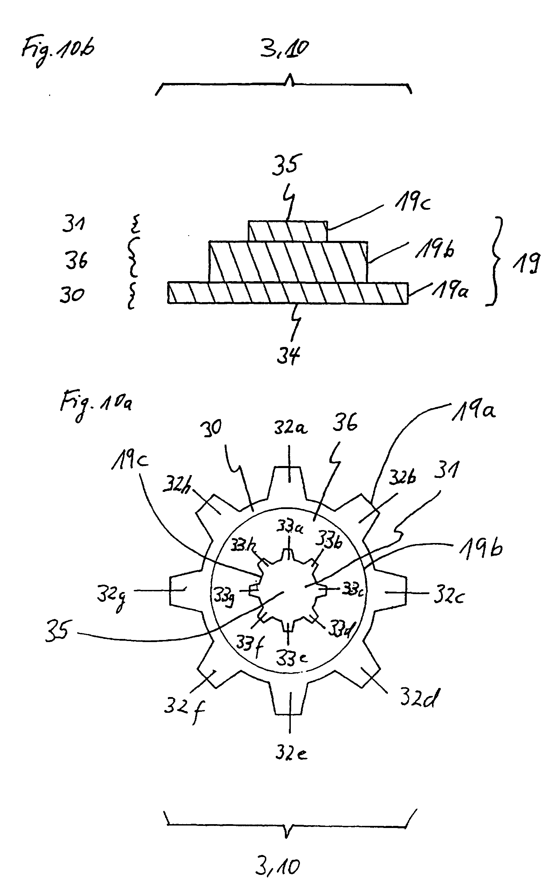

Die Figur 9a zeigt eine Draufsicht und die Figur 9b einen Schnitt eines Bereichs eines weiteren Ausführungsbeispiels des erfindungsgemäßen Magazins 12 mit Mikrobauteilen 1, 10 als Magazin-Formteil-Verbund 15, wobei das Magazin 12 lediglich an den Bodenteilen 1 a der Mikrobauteile 1, 10 anbindet, aber im Unterschied zur Ausführungsform der Figur 7 mehrere Ausnehmungen 17 aufweist. Bei dem hier gewählten Ausführungsbeispiel sind jeweils zwei Ausnehmungen 17 gegenüberliegend und direkt angrenzend an die Seitenflächen 18a, 18a' eines Bodenteils 1a des Mikrobauteils 1, 10 angeordnet. Gemäß der Figur 9b sind die Ausnehmungen 17 mit im Vergleich zur Bauhöhe des Magazins 12 gleicher Höhe als Freiflächen, also Flächen ohne Formstoff, im Magazin 12 ausgebildet. Diese Ausführungform der Ausnehmungen 17 verbessert den vollautomatischen Einsatz des Montagegreifers, da der Montagegreifer die Mikrobauteile 1, 10 im Bereich der Ausnehmungen 17 vollständig an der gesamten Seitenfläche 18, 18' und auch falls nötig an der Unterseite der Bodenfläche 1 a ergreifen kann. In einer anderen nicht dargestellten Ausführungsform sind die Ausnehmungen 17 im Vergleich zur Bauhöhe des Magazins 12 mit unterschiedlicher Höhe als Vertiefungen bzw. Greifertaschen im Magazin 12 ausgebildet, so daß zumindest Teile der seitlichen Flächen des Mikrobauteils 1, 10, beispielsweise Teile der seitlichen Flächen 18 , 18a' des Bodenteils 1a, weiterhin an das Magazin 12 anbinden. Selbstverständlich können die Ausnehmungen 17 auch zum Ergreifen beim Transport und bei der Lagerung der Mikrobauteile 10 als Greiftaschen verwendet werden.

Ein weiterer Vorteil dieser Ausführungsform des erfindungsgemäßen Magazins 12 mit Ausnehmungen 17 besteht darin, daß die Haftflächen und damit die Haftkräfte zwischen Magazin 12 und Mikrobauteilen 1, 10 im Vergleich zu einem formschlüssigen Anbinden gemäß Figur 7 nochmals deutlich reduziert werden. Dies erleichtert den bei der Montage der Mikrobauteile 1, 10 notwendigen Lösevorgang des Haftkontakts zwischen Magazin 12 und den Mikrobauteilen 1, 10. Hierdurch wird insbesondere auch eine deutliche Reduzierung von Reaktionskräften auf den meist empfindlichen Montagegreifer erreicht, so daß damit auch eine größere Greifergeschwindigkeit und somit Montagegeschwindigkeit ermöglicht werden.

Zur Herstellung dieser Ausführungsform des erfindungsgemäßen Magazins 12 mit Ausnehmungen 17 bedarf es eines geänderten Spritzgußwerkzeuges, wobei nun im Unterschied zur Figur 4 eine Werkzeughälfte 4c mit einer strukturierten Wanne 28, die Negativformen, wie beispielsweise Stufen, Säulen, Wandungen oder dgl. aufweist, zur abformtechnischen Herstellung des Magazins 12 eingewechselt wird. Hierdurch wird ersichtlich, daß durch einfache Variation der Höhen der Negativformen die Ausnehmungen 17 im Vergleich zur Bauhöhe des Mikrobauteils 1, 10 mit beliebiger Höhe hergestellt werden können. Die Ausnehmungen 17 können auch so hergestellt werden, daß nur eine Seite oder ein Teil einer Seite des Mikrobauteils 1, 10 an das Magazin 12 angebunden ist. Eine andere Variante besteht darin, daß das Magazin 12 angrenzend an eine Seite des Mikrobauteits 1, 10 eine Ausnehmung 17 mit einem derart großen Querschnitt aufweist, daß das Mikrobauteil 1, 10 mit vollem Umfang durch diese Ausnehmung 17 aus dem Magazin 12 entnehmbar ist.

Durch die Verwendung einer Werkzeughälfte 4c mit einer strukturierten Wanne 28 zur abformtechnischen Herstellung des Magazins 12, die Negativformen, wie beispielsweise Stufen, Säulen, Wandungen oder dgl. aufweist, kann das Magazin 12 auch in beliebigen Bauhöhen und damit an beliebigen Teilen der seitlichen Flächen eines Mikrobauteils 10 partiell angeformt werden.

Hierzu zeigt zunächst die Figur 10a eine Draufsicht und die Figur 10b einen Schnitt eines zweiten und komplizierteren Ausführungsbeispiels eines mit dem erfindungsgemäßen Verfahren hergestellten Mikrobauteils 10 in Form eines zweistufigen Mikrozahnrades 3. Zur Herstellung dieses Mikrozahnrades 3, 10 wurde im Spritzgußwerkzeug sowohl in der schließseitigen Formaufnahme 7a, 7a' als auch in der angußseitigen Formaufnahme 7b, 7b' mikrostrukturierte Formeinsätze verwendet. Beide Figuren 10a, 10b zeigen, daß das Mikrozahnrad 3, 10 eine Verjüngung von der ersten Stufe in Form eines Mikrozahnrades 30 mit mehreren Zähnen 32a-h über ein unstrukturiertes Stufenteil 36 hin zur zweiten Stufe in Form eines Mikrozahnrades 31 mit mehreren Zähnen 33a-h aufweist. Gemäß Figur 10b trägt die Seitenfläche des Mikrobauteils 3, 10 das Bezugszeichen 19, der Teil der seitlichen Fläche des Mikrozahnrades 30 das Bezugszeichen 19a, der Teil der seitlichen Fläche des Stufenteils 36 das Bezugszeichen 19b und der Teil der seitlichen Fläche des Mikrozahnrades 31 das Bezugszeichen 19c.

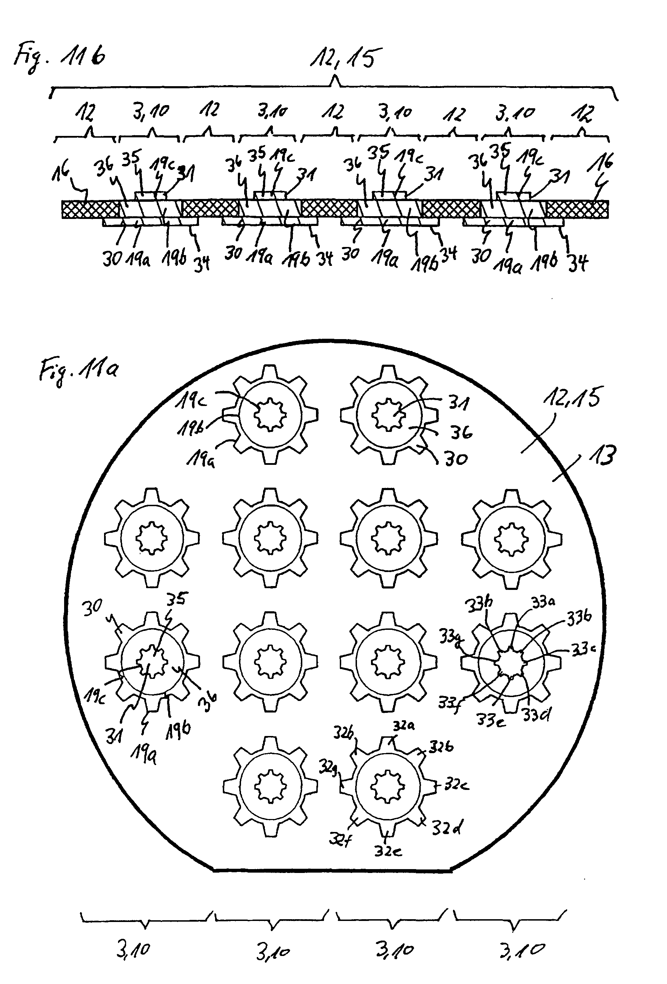

Die Figuren 11a und 11b stellen ein weiteres Ausführungsbeispiel des erfindungsgemäßen Magazins 12 mit mehreren Mikrobauteilen 3, 10 als Magazin-Formteil-Verbund 15 dar, wobei das Magazin 12 formschlüssig lediglich in der Bauhöhe und an den seitlichen Flächen 19b der Stufenteile 36 dieser Mikrozahnräder 3, 10 anbindet. Bei der Herstellung der Mikrozahnräder 3, 10 wurden zwei mikrostrukturierte Formeinsätze derart verwendet, daß nachfolgend bei der Öffnung des Spritzgußwerkzeugs 4 lediglich die Mikrozahnräder 31 der zweiten Stufe des Mikrozahnrades 3, 10 mit den schließseitig angeordneten mikrostrukturierten Formeinsätzen 8a, 8a' in Kontakt verbleiben, das Stufenteil 36 und die Mikrozahnräder 30 der ersten Stufe des Mikrozahrades 3, 10 aber aus der schließseitigen Werkzeughälfte 4a frei herausstehen. Nachfolgend wurde zur Herstellung der in Figur 11b dargestellten partiellen Anbindung des Magazins 12 eine strukturierte Wanne 28 mit mehreren im passenden Abstand angeordneten Negativformen des Mikrozahnrades 30 eingewechselt, wobei die Bauhöhe dieser Wanne 28 an die zusammengesetzte Bauteilhöhe der aus den schließseitigen Formeinsätzen 8a, 8a' herausstehenden Stufenteile 36 und Mikrozahnräder 30 angepaßt war. Hierdurch wird ein Schutz der beiden Mikrozahnräder 30 und 31 mit ihren Mikrostrukturen 14 in Form von Zähnen 32a-h und 33a-h erreicht, da deren seitlichen Flächen 19a und 19c nicht an das Magazin 12 angeformt werden können und somit nach dem Entformen dieses Magazins 12 freiliegen. Da bei dieser Ausführungsform des Magazins 12 die sich verjüngenden Mikrozahnräder 3, 10 lediglich nach einer Seite und zwar in Richtung des größeren Mikrozahnrades 30 aus dem Magazin 12 entnehmbar sind, erfolgt die Herausnahme bzw. Montage der Mikrobauteile 3, 10 aus dem Magazin 12 vorzugsweise durch Herausdrücken auf die Stimfläche 35 des kleineren Mikrozahnrades 31, wodurch die Mikrobauteile bei entsprechender Positionierung des Magazins 12 in die Montageposition gelangen.

Selbstverständlich kann auch die Bauhöhe der strukturierten Wanne 28 höher im Vergleich zu den aus den schließseitigen Formeinsätzen 8a und 8a' herausstehenden Bereichen der Mikrobauteile 1, 10 ausgebildet sein, so daß Magazine 12 mit deutlich höherer Bauhöhe im Vergleich zu den Mikrobauteilen 10 hergestellt werden können.

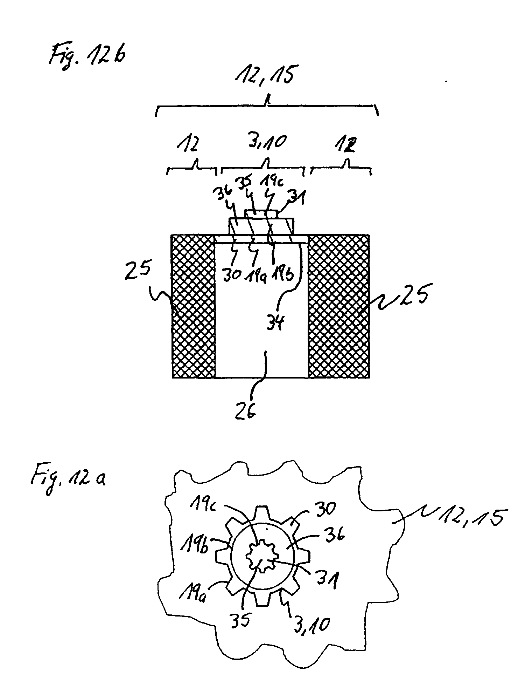

Die Figuren 12a und 12b stellen eine weiteres Ausführungsbeispiel des erfindungsgemäßen Magazins 12 mit mehreren Mikrobauteilen 3, 10 als Magazin-Formteil-Verbund 15 dar, wobei das Magazins 12 mit einer im Vergleich zu den Mikrobauteilen 3, 10 deutlich höheren Bauhöhe formschlüssig lediglich in der Bauhöhe der ersten Stufe dieser Mikrozahnräder 3, 10, insbesondere an den seitlichen Flächen 19a des Mikrozahnrads 30, anbindet. Durch diese Ausführungsform wird ein Schutz der Zähne 32a-h des Mikrozahnrades 30 sowie eine verbesserte Stabilität des Magazins 12 und damit eine bessere Handhabung des Magazins beim Transport, der Lagerung und bei der Montage erreicht.

Gemäß Figur 12b bilden bei dieser Ausführungsform des Magazins 12 die Wandungen 25 des Magazins 12 unterhalb des Mikrobauteils 3, 10 einen Kanal 26. Dieser Kanal 26 wird bei der Montage der Mikrobauteile 3, 10 durch Herausdrücken aus dem Magazin 12 als Führung genutzt. Hierzu wird das Magazin 12 beispielsweise mittels einem Greifer über der Fertigungsposition positioniert und nachfolgend das Mikrobauteil 3, 10 herausgedrückt. Hierdurch gleitet das Mikrobauteil 3, 10 im gewünschten Ordnungszustand durch den Kanal 26 hindurch und ohne Nachjustierung in die Fertigungsposition.

Das erfindungsgemäße Verfahren ermöglicht auch die Herstellung und Magazinierung von komplizierten Mikrobauteilen 10 mit Hinterschneidungen. Zur Herstellung dieser Ausführungsform des erfindungsgemäßen Magazins 12 bedarf es eines geänderten Spritzgußwerkzeuges, wobei nun vorzugsweise Backenwerkzeuge oder Schieber im Spritzgußwerkzeug zum Einsatz kommen, die senkrecht zur Schließbewegung der Werkzeughälfte 4a bewegbar sind und hierdurch über die bereits beschriebene Trennebene 6 hinaus weitere Trennebenen im Spritzgußwerkzeug 4 erzeugen. Durch diese Ausführungsform wird eine erfindungsgemäße gemeinsame Entformung dieser Mikrobauteile 10 und des Magazins 12 als Magazin-Formteil-Verbund 15 sichergestellt. Eine Ausführungsform des Magazins 12, das diese komplizierten Mikrobauteile 10 mit Hinterschneidungen magaziniert, besteht darin, daß nur eine Seite oder ein Teil einer Seite dieses Mikrobauteils 10 an das Magazin 12 anbindet, und daß das Magazin 12 angrenzend an die andere Seite dieses Mikrobauteils 10 eine Ausnehmung 17 mit einem derart großen Querschnitt aufweist, daß das Mikrobauteil 10 mit vollem Umfang durch diese Ausnehmung 17 aus dem Magazin 12 entnehmbar ist. Eine andere Variante der Magazinierung dieser Mikrobauteile 10 mit Hinterschneidungen besteht darin, daß lediglich der Teil der seitlichen Flächen dieser Mikrobauteile 10 mit größtem Umfang an das Magazin 12 anbindet. Eine weitere Variante der Magazinierung dieser Mikrobauteile 10 besteht darin, daß sie an der Boden- oder Stimfläche an das Magazin 12 angebunden werden, wie nachfolgende Ausführungsbeispiele zeigen.

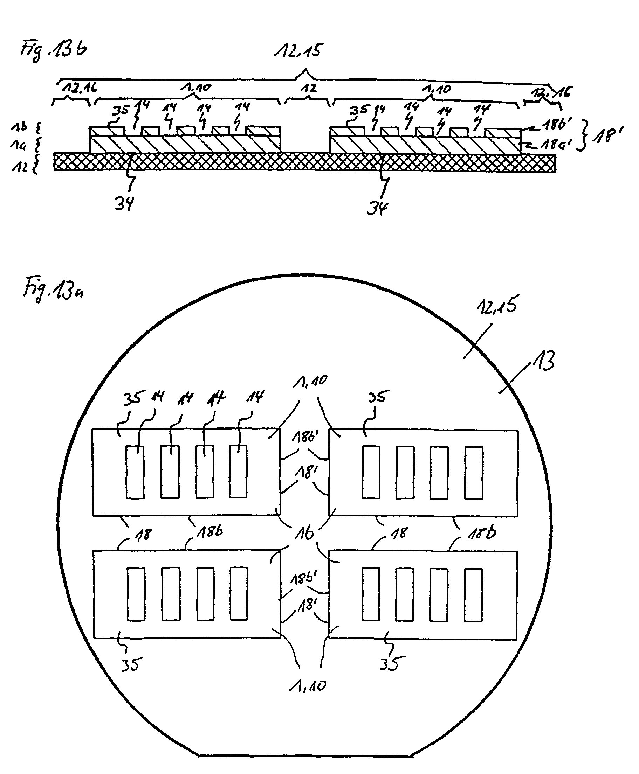

Die Figur 13a zeigt eine Draufsicht und die Figur 13b einen Schnitt eines weiteren Ausführungsbeispiels des erfindungsgemäßen Magazins 12 mit Mikrobauteilen 1, 10 als Magazin-Formteil-Verbund 15, wobei das Magazin 12 die Mikrobauteile 1, 10 jeweils lediglich an der Bodenfläche 34 des Bodenteils 1a derart vollflächig anbindet, daß die Mikrobauteile 1, 10 auf dem Magazin 12 aufliegen bzw. aufsitzen. Der besondere Vorteil dieses Ausführungsbeispiels liegt darin, daß der Montagegreifer das Mikrobauteil 1, 10 an den gesamten Seitenflächen 18, 18', also sowohl an den Seitenflächen 18a, 18a' des Bodenteils 1a als auch an den Seitenflächen 18b, 18b'des Stirnteils 1b, erfassen kann, da diese nicht durch das Magazin 12 angebunden sind. Ferner ist hierdurch eine Magazinierung von Mikrobauteilen 10, die keine für das abformtechnische Herstellungsverfahren geeigneten Seitenflächen zum Anbinden des Magazins 12, wie beispielsweise Mikrobauteile 10 mit konkaven oder konvexen Seitenflächen, aufweisen, ermöglicht. Weiterhin gewährleistet auch diese Ausführungsform des erfindungsgemäßen Magazins 12 einen Schutz für die Mikrostrukturen 14 der Mikrobauteile 10, da das Magazin 12 die Mikrobauteile 1, 10 an der den Mikrostrukturen 14 gegenüberliegenden unstrukturierten Bodenfläche 34 des Bodenteils 1a anbindet. Im Falle, daß das Bodenteil 1a eines Mikrobauteils 10 Mikrostrukturen 14 aufweist, kann das Magazin 12 selbstverständlich auch in gleicher Art und Weise gegenüberliegend an der Stimfläche 35 eines Mikrobauteils 10 abformtechnisch gefertigt werden. Das Aufliegen der Mikrobauteile 1, 10 auf dem Magazin 12 wird hierbei durch den erfindungsgemäßen Haftkontakt ermöglicht, wobei vorzugsweise ein physikalischer Haftkontakt durch Oberflächenrauhigkeit oder thermisch bedingtes Anschmelzen zwischen den beiden Formteile auftritt.

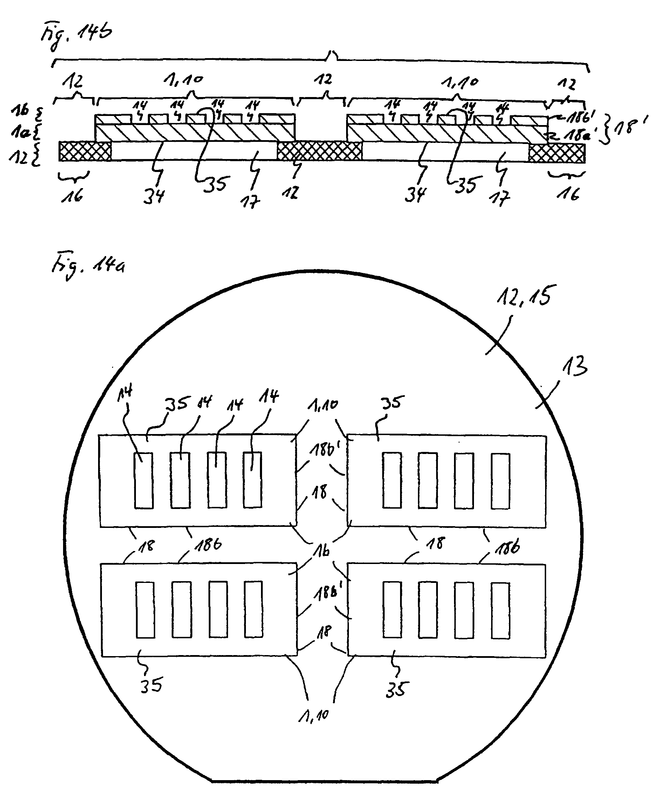

Die Figuren 14a, b zeigen eine weitere Variante des erfindungsgemäßen Magazins 12 mit Mikrobauteilen 1, 10 als Magazin-Formteil-Verbund 15, wobei das Magazin 12 die Mikrobauteile 1, 10 im Unterschied zur zuvor beschriebenen Ausführungsform lediglich an Teilen der Bodenfläche 34 der Bodenteile 1a anbindet. Hierzu weist das Magazin 12 bei dem hier gewählten Ausführungsbeispiel gemäß Figur 14b jeweils eine Ausnehmung 17 direkt angrenzend an die Bodenfläche 34 des Bodenteils 1a derart auf, daß lediglich Teile und nicht die gesamte Bodenfläche 34 mit dem Magazin 12 in Haftkontakt steht. Durch diese Ausführungsform werden im Vergleich zur Ausführungsform in Figur 13 zum einen die Haftflächen zwischen dem Magazin 12 und einem Mikrobauteil 1, 10 verringert, so daß der Ablösevorgang bei der Montage der Mikrobauteile 1, 10 mit geringeren Kräften auskommt. Zum anderen wird hierdurch auch eine Montage durch Herausdrücken der Mikrobauteile 1, 10 verbessert, da diese durch einfachen Druck auf den nicht durch das Magazin 12 angebundenen Teil der Bodenfläche 34 des Bodenteils 1a mit verringerten Kräften vom Magazin 12 abgelöst werden können.

Zur Herstellung der Ausführungsformen des erfindungsgemäßen Magazins 12 in den Figuren 13 und 14, wobei die Mikrobauteile 1, 10 auf dem Magazin 12 aufsitzen wird vorzugsweise ein im Vergleich zur Figur 4 in zweifacher Weise geändertes Spritzgußwerkzeug eingesetzt. Zum einen ist die Werkzeughälfte 4a und hierin die schließseitige Formaufnahme 7a, 7a' derart ausgebildet, daß das Mikrobauteil 1, 10 nach dessen Fertigung im ersten Spritzguß hierin vollständig verbleibt. Nachfolgend wird die Werkzeughälfte 4c aus Figur 4a mit unstrukturierter Wanne 28 zur abformtechnischen Herstellung des Magazins 12 verwendet. Zum anderen wird im Unterschied hierzu für die Herstellung des Magazins gemäß Figur 14 eine nicht dargestellte strukturierte Wanne 28 verwendet, wobei diese vom Boden der Wanne 28 passend zu den gefertigten Mikrobauteilen 1, 10 aufstehende Negativformen, wie beispielsweise Säulen oder Stempel, aufweist, deren Höhe bei dem hier gewählten Ausführungsbeispiel der Bauhöhe der Wanne 28 entspricht.

Wie die bereits dargestellten Ausführungsbeispiele gezeigt haben, wird durch das erfindungsgemäße Verfahren zur abformtechnischen Herstellung und Magazinierung von vorzugsweise mehreren Mikrobauteilen 1, 3, 10 eine große Flexibilität für die Herstellung des erfindungsgemäßen Magazins 12 erreicht, da alle Abmessungen des Magazins 12, insbesondere auch dessen Bauhöhe, durch die konkrete Ausgestaltung des Spritzgußwerkzeugs 4 vorgegeben werden können. Daher liegt es auch im Sinne der Erfindung das erfindungsgemäße Verfahren dahingehend zu modifizieren, daß zunächst das erfindungsgemäße Magazin 12 abformtechnisch hergestellt wird und erst danach die Mikrobauteile 1, 3, 10 in das dann vorgegebene Magazin 12 abformtechnisch eingeformt werden. Die einzelnen Verfahrensschritte dieses modifizierten erfindungsgemäßen Verfahrens sind dem Anspruch 2 zu entnehmen. Auch bei diesem Verfahren kommen vorzugsweise die verschiedenen Ausführungsformen des Spritzgußwerkzeuges zum Einsatz.

Da bei Anwendung des bevorzugten direkt aufeinanderfolgenden Zweikomponenten-Spritzgußverfahrens in einer Werkzeugaufspannung zur abformtechnischen Herstellung der Mikrobauteile 1, 3, 10 und des Magazins 12 vorteilhaft der zuerst eingesetzte Formstoff eine höhere Erweichungstemperatur im Vergleich zum danach eingesetzten zweiten Formstoff aufweist, um ein Aufweichen und damit Zerfließen des zuerst hergestellten Formteils zu vermeiden, liegt der besondere Vorteil dieses modifizierten Verfahrens im Vergleich zu dem zuerst beschriebenen Verfahren darin, daß damit auch Formstoffe mit einer vergleichsweise höheren Erweichungstemperatur für die abformtechnische Herstellung des Magazins 12 eingesetzt werden können. Dementsprechend kann für die abformtechnische Herstellung der Mikrobauteile 1, 3, 10 auch ein Formstoff mit einer vergleichsweise niedrigeren Erweichungstemperatur eingesetzt werden. Demnach sind neue Kombinationen von verschiedenen Formstoffen ermöglicht, so daß auch hierdurch die Flexibilität bei der Herstellung des erfindungsgemäßen Magazins 12 mit Mikrobauteilen 10 als Magazin-Formteil-Verbund 15 deutlich vergrößert wird. Hierdurch wird auch die im Magazin-Formteil-Verbund 15 miteinander kombinierbare Vielfalt der mit den Formstoffen verbundenen physikalischen Eigenschaften, wie beispielsweise mechanische Festigkeit, optische Transparenz, Temperaturfestigkeit sowie Haftung und Lösevermögen deutlich vergrößert.

Da bei dem Verfahren gemäß Anspruch 2 das zuerst abformtechnisch hergestellte Magazin 12 nachfolgend in Art eines Formeinsatzes insbesondere eine seitliche Begrenzung, aber auch denkbar eine obere und/oder untere Begrenzung, bei der abformtechnischen Herstellung der Mikrobauteile 1, 3, 10 vorgibt, liegt es auch im Sinne der Erfindung gemäß Anspruch 12 ein bereits vorgefertigtes Magazin 12' zur Herstellung der Mikrobauteile 10 wieder zu verwenden. Hierdurch wird eine noch höhere Effizienz bei der Herstellung des erfindungsgemäßen Magazins 12 erreicht, da nun lediglich die Mikrobauteile 1, 3, 10 zu fertigen sind. Ferner kann hierdurch die Flexibilität bei der Herstellung des erfindungsgemäßen Magazins 12 nochmals vergrößert werden, da beispielsweise das vorgefertigte Magazin 12' durch den Abformprozeß zur Herstellung der Mikrobauteile 10 noch modifiziert werden kann. Beispielsweise kann ein Kunststoff mit gebinderten Metallbestandteilen verwendet werden, um auf der Oberfläche des Magazins 12' metallische Bereiche oder metallische Strukturen zu erzeugen, die nachfolgend beispielsweise das Ergreifen und/oder Positionieren des Magazins 12 durch einen Magnetgreifer ermöglichen. Ferner können vorgefertigte Magazine 12' aus Metall oder keramischen Werkstoffen in diesem Verfahren gemäß Anspruch 12 zum Einsatz kommen.

Eine weitere Ausführungsform des erfindungsgemäßen Verfahrens kann darin bestehen, daß das zuerst abformtechnisch hergestellte Formteil, also das mikrostrukturierte Formteil oder das Magazin 12, mit oder ohne Formeinsatz in ein neues Spritzgußwerkzeug und gegebenenfalls auch in eine zweite Spritzgußvorrichtung eingesetzt wird, um hier erfindungsgemäß das zweite Formteil, beispielsweise das Mikrobauteil 1, 3, 10, abformtechnisch herzustellen. Als nachteilig bei diesem Verfahren ist sicherlich der erhöhte Geräteaufwand anzusehen. Allerdings kann eine durch diese Ausführungsform bedingte größere zeitliche Trennung der Herstellung des ersten und zweiten Formteiles aufgrund des Schwundverhaltens des ersten Formstoffes gewünscht sein, um nachfolgend das zweite Formteil herstellen zu können.

Bezugszeichen:
- 1: Mikrobauteil
- 1a: Bodenteil
- 1b: Stirnteil
- 1b': Stimfläche
- 1c-f: Senken
- 3: zweistufiges Mikrozahnrad
- 4 bis 6: Spritzgußwerkzeug
- 4a bis 6a: erste Werkzeughälfte
- 4b bis 6b: zweite Werkzeughälfte
- 4c, 5c: weitere Werkzeughälfte
- 7a, a': schließseitige Formaufnahme
- 7b, b': angußseitige Formaufnahme
- 7c: weitere angußseitige Formaufnahme
- 8a, a': mikrostrukturierter Formeinsatz
- 8b, b': wannenförmiger Formeinsatz
- 8c: weiterer wannenförmiger Formeinsatz
- 9, 9', 9": Angußkanal
- 9a, a', a": Anschnitt
- 9: Mikrobauteil
- 11a-e: Auswerferstift
- 12, 12': Magazin
- 13: Wafer
- 14: Mikrostruktur
- 15, 15': Magazin-Formteil-Verbund
- 16: Überstand des Magazins
- 17: Ausnehmung
- 18, 18': Seitenfläche
- 18a, a': Teil der seitlichen Fläche
- 18b, b': Teil der seitlichen Fläche
- 19a-c: Teil der seitlichen Fläche
- 21: Trennebene
- 25: Wandung
- 26: Kanal
- 27a, a': Wanne
- 28: Wanne
- 29: weiterer Angußkanal
- 29a: Anschnitt
- 30: Mikrozahnrad
- 31: Mikrozahnrad
- 32a-h: Zähne
- 33a-h: Zähne
- 34: Bodenfläche
- 35: Stirnfläche
- 36: Stufenteil

## Patentansprüche

1. Verfahren zur abformtechnischen Herstellung und Magazinierung von mindestens einem mikrostrukturierten Formteil als Magazin-Formteil-Verbund,
**gekennzeichnet durch** folgende Prozeßschritte:
a. Abformtechnische Herstellung mindestens eines mikrostrukturierten Formteils (1, 3, 10) unter Verwendung eines zunächst geschlossenen Werkzeuges (4), welches mindestens eine erste und eine zweite Werkzeughälfte (4a, 4b) aufweist;
b. Öffnen der beiden Werkzeughälften (4a, 4b), wobei das Formteil (1, 3, 10) in der ersten Werkzeughälfte (4a) verbleibt;
c. Wechseln zumindest der zweiten Werkzeughälfte (4b) gegen zumindest eine weitere Werkzeughälfte (4c);
d. Abformtechnische Herstellung des Magazins (12) unter Verwendung der das Formteil (1, 3, 10) aufweisenden ersten Werkzeughälfte (4a) und der weiteren Werkzeughälfte (4c);
e. Gemeinsames Entformen des Magazins (12) und des Formteils (1, 3, 10) als Magazin-Formteil-Verbund (15).

2. Verfahren zur abformtechnischen Herstellung und Magazinierung von mindestens einem mikrostrukturierten Formteil als Magazin-Formteil-Verbund,
**gekennzeichnet durch** folgende Prozeßschritte:
a. Abformtechnische Herstellung des Magazins (12) unter Verwendung eines zunächst geschlossenen Werkzeuges (5), welches mindestens eine erste und eine zweite Werkzeughälfte (5a, 5b) aufweist;
b. Öffnen der beiden Werkzeughälften (5a, 5b), wobei das Magazin (12) in der ersten Werkzeughälfte (5a) verbleibt;
c. Wechseln zumindest der zweiten Werkzeughälfte (5b) gegen zumindest eine weitere Werkzeughälfte (5c);
d. Abformtechnische Herstellung mindestens eines mikrostrukturierten Formteils (1, 3, 10) unter Verwendung der das Magazin (12) aufweisenden ersten Werkzeughälfte (5a) und der weiteren Werkzeughälfte (5c);
e. Gemeinsames Entformen des Magazins (12) und des Formteils (1, 3, 10) als Magazin-Formteil-Verbund (15).

3. Verfahren nach Anspruch 1 oder 2, **dadurch gekennzeichnet, daß** zur Herstellung des Magazins (12) und/oder des Formteils (1, 3, 10) im Werkzeug (4, 5) mindestens ein mikrostrukturierter Formeinsatz (8a, 8a', 8b, 8b', 8c) verwendet wird.

4. Verfahren nach einem der Ansprüche 1 bis 3, **dadurch gekennzeichnet, daß** Formteil (1, 3, 10) und Magazin (12) mit unterschiedlichen Bauhöhen hergestellt werden.

5. Verfahren nach einem der Ansprüche 1 bis 4, **dadurch gekennzeichnet, daß** das Magazin (12) im Vergleich zur horizontalen Abmessung des Formteils (1, 3, 10) mit seitlichem Überstand (16) hergestellt wird.

6. Verfahren nach einem der Ansprüche 1 bis 5, **dadurch gekennzeichnet, daß** das Magazin (12) in Haftkontakt mit Teilen der seitlichen Flächen (18a, 18a', 18b, 18b', 19a, 19b, 19c) des Formteils (1, 3, 10) hergestellt wird.

7. Verfahren nach einem der Ansprüche 1 bis 6, **dadurch gekennzeichnet, daß** das Magazin (12) in Haftkontakt mit den Mikrostrukturen (14) des Formteils (1, 3, 10) hergestellt wird.

8. Verfahren nach einem der Ansprüche 1 bis 7, **dadurch gekennzeichnet, daß** das Magazin (12) mit Ausnehmungen (17) hergestellt wird.

9. Verfahren nach einem der Ansprüche 1 bis 8, **dadurch gekennzeichnet, daß** das Magazin in Haftkontakt mit der Boden- (34) oder der Stimfläche (35) des Formteils (1, 3, 10) hergestellt wird.

10. Verfahren nach einem der Ansprüche 1 bis 9, **dadurch gekennzeichnet, daß** das Magazin in Haftkontakt mit Teilen der Boden- (34) oder mit Teilen der Stimfläche (35) des Formteils (1, 3, 10) hergestellt wird.

11. Verfahren nach einem der Ansprüche 1 bis 10, **dadurch gekennzeichnet, daß** das Formteil (1, 3, 10) und das Magazin (12) mit gleichen oder unterschiedlichen Formstoffen hergestellt werden.

12. Verfahren zur abformtechnischen Herstellung und Magazinierung von mindestens einem mikrostrukturierten Formteil als Magazin-Formteil-Verbund,
**gekennzeichnet durch** folgende Prozeßschritte:
a. Abformtechnische Herstellung mindestens eines mikrostrukturierten Formteils (1, 3, 10) unter Verwendung eines vorgefertigten Magazins (12');
b. Gemeinsames Entformen des Magazins (12') und des Formteiles (1, 3, 10) als Magazin-Formteil-Verbund (15').

13. Verfahren nach Anspruch 12, **dadurch gekennzeichnet, daß** ein geteiltes Werkzeug (6), welches mindestens eine erste und zweite Werkzeughälfte (6a, 6b) aufweist, verwendet wird.

14. Verfahren nach Anspruch 12 oder 13, **dadurch gekennzeichnet, daß** als vorgefertigtes Magazin (12') ein nach den Ansprüchen 1 oder 2 hergestelltes Magazin (12) nach Entnahme der mikrostrukturierten Formteile (1, 3, 10) verwendet wird.

15. Magazin mit mindestens einem mikrostrukturierten Formteil, das als Magazin-Formteil-Verbund (15, 15') hergestellt nach dem Verfahren einer der Ansprüche 1, 2 oder 12 vorliegt, wobei das Magazin (12, 12') das Formteil (1, 3, 10) unter Freilassung von Teilen seiner seitlichen Flächen (18a, 18a', 18b, 18b', 19a, 19b, 19) durch Haftkontakt anbindet.

16. Magazin nach Anspruch 15, wobei das Magazin (12, 12') im Vergleich zum Formteil (1, 3, 10) eine unterschiedliche Bauhöhe aufweist.

17. Magazin nach einem der Ansprüche 15 oder 16, wobei das Magazin (12, 12') eine Waferform (13) in einem für die Halbleitertechnik üblichen Standardformat aufweist.

18. Magazin nach einem der Ansprüche 15 bis 17, wobei das Magazin (12, 12') das Formteil (1, 3, 10) an den Mikrostrukturen (14) anbindet.

19. Magazin nach einem der Ansprüche 15 bis 18, wobei das Magazin (12, 12') angrenzend an die seitlichen Flächen (18a, 18b, 18c, 19a, 19b, 19c) des Formteils (1, 3, 10) mindestens eine Ausnehmung (17) aufweist.

20. Magazin nach einem der Ansprüche 15 bis 19, wobei das Magazin (12, 12') das Formteil (1, 3, 10) vollflächig an der Boden- (34) oder der Stirnfläche (35) anbindet.

21. Magazin nach einem der Ansprüche 15 bis 19, wobei das Magazin (12, 12') das Formteil (1, 3, 10) an Teilen der Boden- (34) oder Teilen der Stirnfläche (35) anbindet.

22. Magazin nach einem der Ansprüche 15 bis 21, wobei das Magazin (12) und das Formteil (1, 3 10) abformtechnisch nach Art der Verfahren des Anspruches 1 oder 2 hergestellt ist.

23. Magazin nach einem der Ansprüche 15 bis 22, wobei das Magazin (12, 12') nach Entnahme der Mikrobauteile (1, 3, 10) in dem Verfahren nach Anspruch 12 als vorgefertigtes Magazin verwendbar ist.

24. Magazin nach einem der Ansprüche 15 bis 23, wobei das Magazin (12, 12') mehrere Formteile (1, 3, 10) beabstandet zueinander anbindet.

## Claims

1. Method for moulding and magazining at least one microstructured moulded part as a magazine/moulded part composite structure,
**characterized by** the following process steps:
a. moulding at least one microstructured moulded part (1, 3, 10) using an initially closed mould (4), which comprises at least one first and one second mould half (4a, 4b);
b. opening the two mould halves (4a, 4b), the moulded part (1, 3, 10) remaining in the first mould half (4a);
c. changing at least the second mould half (4b) for at least one further mould half (4c);
d. moulding the magazine (12) using the first mould half (4a), having the moulded part (1, 3, 10), and the further mould half (4c);
e. jointly removing the magazine (12) and the moulded part (1, 3, 10) as a magazine/moulded part composite structure (15).

2. Method for moulding and magazining at least one microstructured moulded part as a magazine/moulded part composite structure,
**characterized by** the following process steps:
a. moulding the magazine (12) using an initially closed mould (5), which has at least one first and one second mould half (5a, 5b);
b. opening the two mould halves (5a, 5b), the magazine (12) remaining in the first mould half (5a);
c. changing at least the second mould half (5b) for at least one further mould half (5c);
d. moulding at least one microstructured moulded part (1, 3, 10) using the first mould half (5a), having the magazine (12), and the further mould half (5c);
e. jointly removing the magazine (12) and the moulded part (1, 3, 10) as a magazine/moulded part composite structure (15).

3. Method according to Claim 1 or 2, **characterized in that** at least one microstructured mould insert (8a, 8a', 8b, 8b', 8c) is used for producing the magazine (12) and/or the moulded part (1, 3, 10) in the mould (4, 5).

4. Method according to one of Claims 1 to 3, **characterized in that** the moulded part (1, 3, 10) and the magazine (12) are produced with different overall heights.

5. Method according to one of Claims 1 to 4, **characterized in that** the magazine (12) is produced with a lateral overhang (16) in comparison with the horizontal dimension of the moulded part (1, 3, 10).

6. Method according to one of Claims 1 to 5, **characterized in that** the magazine (12) is produced in adhering contact with parts of the lateral faces (18a, 18a', 18b, 18b', 19a, 19b, 19c) of the moulded part (1, 3, 10).

7. Method according to one of Claims 1 to 6, **characterized in that** the magazine (12) is produced in adhering contact with the microstructures (14) of the moulded part (1, 3, 10).

8. Method according to one of Claims 1 to 7, **characterized in that** the magazine (12) is produced with recesses (17).

9. Method according to one of Claims 1 to 8, **characterized in that** the magazine is produced in adhering contact with the bottom face (34) or the end face (35) of the moulded part (1, 3, 10).

10. Method according to one of Claims 1 to 9, **characterized in that** the magazine is produced in adhering contact with parts of the bottom face (34) or with parts of the end face (35) of the moulded part (1, 3,10).

11. Method according to one of Claims 1 to 10, **characterized in that** the moulded part (1, 3, 10) and the magazine (12) are produced with the same or different moulding materials.

12. Method for moulding and magazining at least one microstructured moulded part as a magazine/moulded part composite structure,
**characterized by** the following process steps:
a. moulding at least one microstructured moulded part (1, 3, 10) using a prefabricated magazine (12');
b. jointly removing the magazine (12') and the moulded part (1, 3, 10) as a magazine/moulded part composite structure (15').

13. Method according to Claim 12, **characterized in that** a divided mould (6), which has at least one first and one second mould half (6a, 6b), is used.

14. Method according to Claim 12 or 13, **characterized in that** a magazine (12) produced according to Claims 1 or 2 is used as a prefabricated magazine (12') after removal of the microstructured moulded parts (1, 3, 10).

15. Magazine with at least one microstructured moulded part, which takes the form of a magazine/moulded part composite structure (15, 15') produced according to the method of one of Claims 1, 2 or 12, the magazine (12, 12') attaching the moulded part (1, 3, 10) by adhering contact while leaving parts of its lateral faces (18a, 18a', 18b, 18b', 19a, 19b, 19) free.

16. Magazine according to Claim 15, the magazine (12, 12') having a different overall height in comparison with the moulded part (1, 3, 10).

17. Magazine according to either of Claims 15 and 16, the magazine (12, 12') having the form of a wafer (13) in a standard format customary for semiconductor technology.

18. Magazine according to one of Claims 15 to 17, the magazine (12, 12') attaching the moulded part (1, 3, 10) to the microstructures (14).

19. Magazine according to one of Claims 15 to 18, the magazine (12, 12') having at least one recess (17) adjacent to the lateral faces (18a, 18b, 18c, 19a, 19b, 19c) of the moulded part (1, 3, 10).

20. Magazine according to one of Claims 15 to 19, the magazine (12, 12') attaching the moulded part (1, 3, 10) with its full surface area to the bottom face (34) or the end face (35).

21. Magazine according to one of Claims 15 to 19, the magazine (12, 12') attaching the moulded part (1, 3, 10) to parts of the bottom face (34) or parts of the end face (35).

22. Magazine according to one of Claims 15 to 21, the magazine (12) and the moulded part (1, 3, 10) being moulded in the manner of the method of Claim 1 or 2.

23. Magazine according to one of Claims 15 to 22, the magazine (12, 12') being able to be used as a prefabricated magazine after removal of the microcomponents (1, 3, 10) in the method according to Claim 12.

24. Magazine according to one of Claims 15 to 23, the magazine (12, 12') attaching a number of moulded parts (1, 3, 10) kept at a distance from one another.

## Revendications

1. Procédé de fabrication par technique de moulage et de chargement d'au moins une pièce moulée microstructurée sous la forme d'un composé chargeur - pièce moulée, **caractérisé par** les étapes suivantes :
a. Fabrication par technique de moulage d'au moins une pièce moulée microstructurée (1, 3, 10) en utilisant un outil (4) initialement fermé qui présente au moins une première et une deuxième moitiés d'outil (4a, 4b) ;
b. Ouverture des deux moitiés d'outil (4a, 4b), la pièce moulée (1, 3, 10) demeurant dans la première moitié d'outil (4a) ;
c. Remplacement d'au moins la deuxième moitié d'outil (4b) par au moins une moitié d'outil supplémentaire (4c) ;
d. Fabrication par technique de moulage du chargeur (12) en utilisant la première moitié d'outil (4a) qui présente la pièce moulée (1, 3, 10) et la moitié d'outil supplémentaire (4c) ;
e. Démoulage commun du chargeur (12) et de la pièce moulée (1, 3, 10) sous la forme d'un composé chargeur - pièce moulée (15).

2. Procédé de fabrication par technique de moulage et de chargement d'au moins une pièce moulée microstructurée sous la forme d'un composé chargeur - pièce moulée, **caractérisé par** les étapes suivantes :
a. Fabrication par technique de moulage du chargeur (12) en utilisant un outil (5) initialement fermé qui présente au moins une première et une deuxième moitiés d'outil (5a, 5b) ;
b. Ouverture des deux moitiés d'outil (5a, 5b), le chargeur (12) demeurant dans la première moitié d'outil (5a) ;
c. Remplacement d'au moins la deuxième moitié d'outil (5b) par au moins une moitié d'outil supplémentaire (5c) ;
d. Fabrication par technique de moulage d'au moins une pièce moulée microstructurée (1, 3, 10) en utilisant la première moitié d'outil (5a) qui présente le chargeur (12) et la moitié d'outil supplémentaire (5c) ;
e. Démoulage commun du chargeur (12) et de la pièce moulée (1, 3, 10) sous la forme d'un composé chargeur - pièce moulée (15).

3. Procédé selon la revendication 1 ou 2, **caractérisé en ce qu'**au moins un insert de moulage (8a, 8a', 8b, 8b', 8c) est utilisé dans l'outil (4, 5) pour la fabrication du chargeur (12) et/ou de la pièce moulée (1, 3, 10).

4. Procédé selon l'une des revendications 1 à 3, **caractérisé en ce que** la pièce moulée (1, 3, 10) et le chargeur (12) sont fabriqués avec des hauteurs hors tout différentes.

5. Procédé selon l'une des revendications 1 à 4, **caractérisé en ce que** le chargeur (12) est fabriqué avec un porte-à-faux latéral (16) en comparaison des dimensions horizontales de la pièce moulée (1, 3, 10).

6. Procédé selon l'une des revendications 1 à 5, **caractérisé en ce que** le chargeur (12) est fabriqué en contact par adhérence avec des parties des surfaces latérales (18a, 18a', 18b, 18b', 19a, 19b, 19c) de la pièce moulée (1, 3, 10).

7. Procédé selon l'une des revendications 1 à 6, **caractérisé en ce que** le chargeur (12) est fabriqué en contact par adhérence avec les microstructures (14) de la pièce moulée (1, 3, 10).

8. Procédé selon l'une des revendications 1 à 7, **caractérisé en ce que** le chargeur (12) est fabriqué avec des creux (17).

9. Procédé selon l'une des revendications 1 à 8, **caractérisé en ce que** le chargeur est fabriqué en contact par adhérence avec la surface du fond (34) ou frontale (35) de la pièce moulée (1, 3, 10).

10. Procédé selon l'une des revendications 1 à 9, **caractérisé en ce que** le chargeur est fabriqué en contact par adhérence avec des parties de la surface du fond (34) ou des parties de la surface frontale (35) de la pièce moulée (1, 3, 10).

11. Procédé selon l'une des revendications 1 à 10, **caractérisé en ce que** la pièce moulée (1, 3, 10) et le chargeur (12) sont fabriqués avec des matières de moule identiques ou différentes.

12. Procédé de fabrication par technique de moulage et de chargement d'au moins une pièce moulée microstructurée sous la forme d'un composé chargeur - pièce moulée, **caractérisé par** les étapes suivantes :
a. Fabrication par technique de moulage d'au moins une pièce moulée microstructurée (1, 3, 10) en utilisant un chargeur préfabriqué (12') ;
b. Démoulage commun du chargeur (12') et de la pièce moulée (1, 3, 10) sous la forme d'un composé chargeur - pièce moulée (15').

13. Procédé selon la revendication 12, **caractérisé en ce que** l'on utilise un outil fractionné (6) qui présente au moins une première et une deuxième moitiés d'outil (6a, 6b).

14. Procédé selon la revendication 12 ou 13, **caractérisé en ce que** le chargeur préfabriqué (12') utilisé est un chargeur (12) fabriqué selon les revendications 1 ou 2 après enlèvement des pièces moulées microstructurées (1, 3, 10).

15. Chargeur comprenant au moins une pièce moulée microstructurée, lequel se présente sous la forme d'un composé chargeur - pièce moulée (15, 15') fabriqué selon le procédé de l'une des revendications 1, 2 ou 12, le chargeur (12, 12') attachant la pièce moulée (1, 3, 10) par adhérence en laissant libres des parties de ses surfaces latérales (18a, 18a', 18b, 18b', 19a, 19b, 19).

16. Chargeur selon la revendication 15, le chargeur (12, 12') présentant une hauteur hors tout différente de celle de la pièce moulée (1, 3, 10).

17. Chargeur selon l'une des revendications 15 ou 16, le chargeur (12, 12') présentant la forme d'une galette (13) dans un format standard courant pour la technologie des semiconducteurs.

18. Chargeur selon l'une des revendications 15 à 17, le chargeur (12, 12') attachant la pièce moulée (1, 3, 10) au niveau des microstructures (14).

19. Chargeur selon l'une des revendications 15 à 18, le chargeur (12, 12') présentant au moins un creux (17) à la limite des surfaces latérales (18a, 18b, 18c, 19a, 19b, 19c) de la pièce moulée (1, 3, 10).

20. Chargeur selon l'une des revendications 15 à 19, le chargeur (12, 12') attachant la pièce moulée (1, 3, 10) sur toute la surface du fond (34) ou de la surface frontale (35).

21. Chargeur selon l'une des revendications 15 à 19, le chargeur (12, 12') attachant la pièce moulée (1, 3, 10) sur des parties de la surface du fond (34) ou de la surface frontale (35).

22. Chargeur selon l'une des revendications 15 à 21, le chargeur (12) et la pièce moulée (1, 3, 10) étant fabriqués par technique de moulage à la manière du procédé selon la revendication 1 ou 2.

23. Chargeur selon l'une des revendications 15 à 22, le chargeur (12, 12') pouvant être utilisé comme un chargeur préfabriqué dans le procédé selon la revendication 12 après enlèvement des microcomposants (1, 3, 10).

24. Chargeur selon l'une des revendications 15 à 23, le chargeur (12, 12') attachant plusieurs pièces moulées (1, 3, 10) espacées les unes des autres.
